# EUROPEAN PATENT SPECIFICATION

(11) **EP 3 920 590 B1**
(45) Date of publication and mention of the grant of the patent: **26.02.2025**
(21) Application number: 20770999.9
(22) Date of filing: 05.03.2020
(51) Int. Cl.: H04W 72/04, H04L 5/00, H04W 72/27

(54) **DATA TRANSMISSION METHOD AND RELATED DEVICE**
DATENÜBERTRAGUNGSVERFAHREN UND ZUGEHÖRIGE VORRICHTUNG
PROCÉDÉ DE TRANSMISSION DE DONNÉES ET DISPOSITIF ASSOCIÉ

(30) Priority: 08.03.2019 CN 201910179341
(43) Date of publication of application: 08.12.2021
(73) Proprietor: Huawei Technologies Co., Ltd., Shenzhen, Guangdong 518129 (CN)
(72) Inventor: GUO, Yuchen, Shenzhen, Guangdong 518129 (CN); YU, Jian, Shenzhen, Guangdong 518129 (CN); GAN, Ming, Shenzhen, Guangdong 518129 (CN)
(74) Representative: Maiwald GmbH
(86) International application number: PCT/CN2020/078053
(87) International publication number: WO 2020/182057

(56) References cited:
- EP-A1- 2 410 780
- EP-A1- 3 637 925
- WO-A1-2012/169951
- WO-A1-2017/020271
- WO-A1-2018/227496
- CN-A- 102 017 765
- CN-A- 107 925 924
- CN-A- 108 882 243
- US-A1- 2017 280 374

## Description

### TECHNICAL FIELD

This application relates to the field of communications technologies, and in particular, to data transmission methods and related devices.

### BACKGROUND

In the prior art, a wireless network is usually provided for each station (station, STA) by deploying a wireless access point (access point, AP). As there is burgeoning demand for wireless networks, APs are deployed increasingly densely. Because neighboring APs interfere with each other, more dense APs also cause great interference.

To reduce interference between the APs, two neighboring APs can establish basic service sets (basic service set, BSS) on different channels, so that the channels used by the two BSSs are different, thereby avoiding interference between the two BSSs. For example, if a total bandwidth of the BSS is 40 MHz, two neighboring APs can separately establish their respective BSSs on different 20 MHz bandwidths, so that the two BSSs work independently and do not interfere with each other. However, in this way, the bandwidth of each BSS is limited to 20 MHz, and this reduces data transmission efficiency. How to improve data transmission efficiency of a user while reducing interference in the wireless network is a problem to be urgently resolved by persons skilled in the art. The EP 2 410 780 A1 refers to a wireless base station, an apparatus, a wireless communication system, a wireless communication method and a program. In the disclosed wireless communication system, base stations cover different cells. A wireless resource allocation request is transmitted when determining that the reservation of wireless resources is necessary. This allows interference between wireless base stations to be suppressed.

The WO 2018 / 227 496 A1 refers to method for transmitting a signal, a network device and a terminal device. The WO 2017 / 020 271 A1 refers to a method and a network node for dynamic resource allocation for control channels. The WO 2012 / 169 951 A1 refers to a dynamic carrier selection for cell base stations.

### SUMMARY

This application provides data transmission methods and related devices, to improve data transmission efficiency of a user while reducing interference in a wireless network. The present application is defined in the appended independent claims. Further implementations are disclosed in the pending independent claims.

According to a first aspect, an embodiment of this application provides a data transmission method. The method includes the features of independent claim 1.

According to a second aspect, an embodiment of this application provides another data transmission method. The method includes the features of independent claim 2.

According to a third aspect, the application provides access points as set out in independent claims 9 and 11.

According to a fourth aspect, an embodiment of this application provides a chip for an access point as set out in independent claim 10.

According to a fifth aspect, the application provides computer-readable storage media storing program instructions which, when executed, cause access points to perform the respective methods.

### BRIEF DESCRIPTION OF DRAWINGS

To describe the technical solutions in the embodiments of this application or in the prior art more clearly, the following briefly describes the accompanying drawings required for describing the embodiments or the prior art.
FIG. 1 is a schematic diagram of an architecture of a data transmission system according to an embodiment of this application;
FIG. 2 is a schematic diagram of an architecture of another data transmission system according to an embodiment of this application;
FIG. 3 is a flowchart of a data transmission method according to an embodiment of this application;
FIG. 4A is a schematic diagram of a user information field in a first trigger frame according to an embodiment of this application;
FIG. 4B is a schematic diagram of a user information field in another first trigger frame according to an embodiment of this application;
FIG. 5A is a schematic diagram of a user information field in another first trigger frame according to an embodiment of this application;
FIG. 5B is a schematic diagram of a second subfield in a user information field according to an embodiment of this application;
FIG. 6 is a schematic diagram of a common information field in a first trigger frame according to an embodiment of this application;
FIG. 7 is a schematic diagram of a common information field in another first trigger frame according to an embodiment of this application;
FIG. 8 is a schematic diagram of a common information field in another first trigger frame according to an embodiment of this application;
FIG. 9 is a schematic diagram of an information field according to an embodiment of this application;
FIG. 10A is a schematic diagram in which a first trigger frame triggers a second AP to perform downlink data transmission with an associated station according to an embodiment of this application;
FIG. 10B is another schematic diagram in which a first trigger frame triggers a second AP to perform downlink data transmission with an associated station according to an embodiment of this application;
FIG. 10C is another schematic diagram in which a first trigger frame triggers a second AP to perform downlink data transmission with an associated station according to an embodiment of this application;
FIG. 11 is a schematic diagram in which a first trigger frame triggers a second AP to perform uplink data transmission with an associated station according to an embodiment of this application;
FIG. 12 is a schematic diagram of a first AP according to an embodiment of this application;
FIG. 13 is a schematic diagram of a second AP according to an embodiment of this application;
FIG. 14 is a schematic diagram of a communications apparatus according to an embodiment of this application;
FIG. 15 is a schematic diagram of another communications apparatus according to an embodiment of this application;
FIG. 16 is a schematic diagram of a frame structure that carries a temporary primary channel identifier according to an embodiment of this application; and
FIG. 17 is a schematic diagram of a user information field in a first trigger frame according to an embodiment of this application.

### DESCRIPTION OF EMBODIMENTS

The technical solutions in the embodiments of this application are described below in more detail.

The technical solutions of this application may be applied to a WLAN network, an IoT network, an internet-of-vehicles network, and another network. This is not specifically limited in this application. For example, an application scenario of this application may be a WLAN network based on the IEEE 802.11ax standard, an IoT network based on the IEEE 802.11ax standard, an internet-of-vehicles (Vehicle-to-X, V2X) network based on the IEEE 802.11ax standard, or another network based on the IEEE 802.11ax standard, or may be a WLAN network based on a next generation standard of 802.11ax, an IoT network based on a next-generation standard of IEEE 802.11ax, an internet-of-vehicles (Vehicle-to-X, V2X) based on a next-generation standard of IEEE 802.11ax, or another network based on a next-generation standard of IEEE 802.11ax, or may be another WLAN network based on a future standard protocol.

A data transmission system provided in the embodiments of this application includes at least two access points (access point, AP) and at least two stations (station, STA). The two types of devices are further described below.

The STA in the embodiments of this application is an apparatus having a wireless communications function, and may be user equipment, an access terminal, a user unit, a user station, a mobile station, a mobile station, a remote terminal, a mobile device, a user terminal, a terminal, a wireless communications device, a user agent, or a user apparatus. The terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, or a terminal device in a future evolved public land mobile network (public land mobile network, PLMN). This is not limited in the embodiments of this application.

The AP in the embodiments of this application may be a device configured to communicate with a STA. The AP may be any device having a wireless transceiver function or a chip that can be disposed on the device. The device includes, but is not limited to, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB or home NodeB, HNB), a baseband unit (baseband Unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like, or may be a gNB or a transmission point (TRP or TP) in a 5G system, such as an NR system, an antenna panel or an antenna panel group (including a plurality of antenna panels) of a base station in the 5G system, or may be a network node constituting a gNB or a transmission point, such as a baseband unit (BBU) or a distributed unit (distributed unit, DU).

A communication resource in the embodiments of this application may be one or more of a resource unit (resource unit, RU), a channel channel, and a spatial flow. The resources are further described below. Resource unit: A basic frequency resource of a wireless network may be divided by the RU. RU types included in current IEEE 802.11ax mainly include a 26-tone RU, a 52-tone RU, a 106-tone RU, a 242-tone RU, a 484-tone RU, and a 996-tone RU. As basic frequency resource units, the RUs may be allocated to different users for uplink and downlink data transmission. RUs of different sizes have different bandwidths and may carry services at different rates. Channel: A basic resource of a wireless network may be divided by the channel. Based on a current IEEE 802.11ax network, channels with bandwidths such as 20 MHz, 40 MHz, 80 MHz, and 160 MHz may be provided. Corresponding to these channels, maximum data rates of 1.1 Gbps, 2.3 Gbps, 4.8 Gbps, and 9.6 Gbps may be provided respectively.

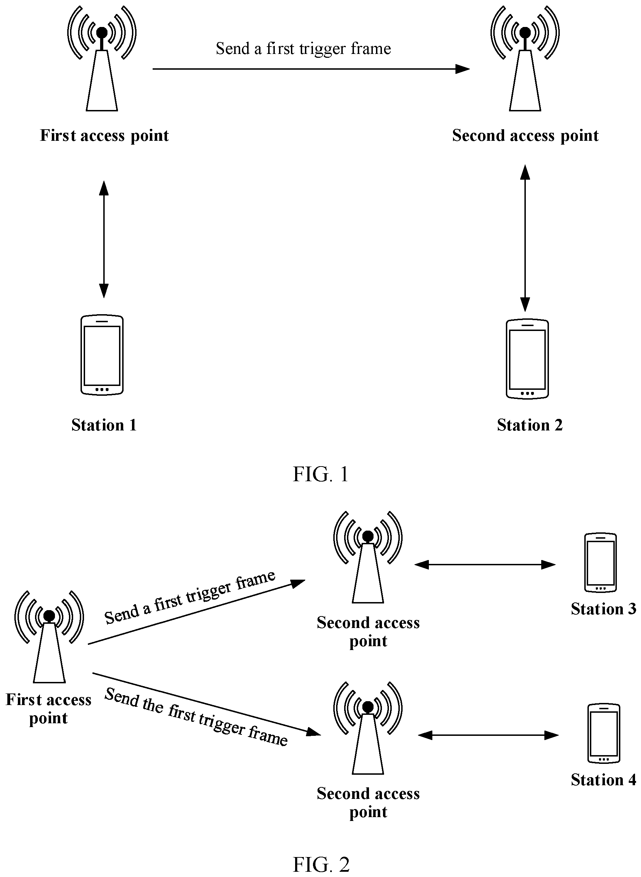

FIG. 1 is a schematic diagram of an architecture of a data transmission system according to an embodiment of this application. The data transmission system includes two APs and two STAs. The two APs are a first AP and a second AP. A STA 1 in the two STAs is a STA associated with the first AP, and a STA 2 is a STA associated with the second AP. It should be noted that there may be two, three, or more second APs. This is not limited herein, and only one second AP is used as an example.

Specifically, the first AP may allocate a communication resource used for data transmission between the first AP and the STA 1 associated with the first AP. In addition, the first AP may further send a first trigger frame to the second AP to trigger the second AP to perform, by using an allocated communication resource, data transmission with the STA 2 associated with the second AP. The first trigger frame includes identification information of the second AP and resource allocation information indicating the allocated communication resource of the second AP. According to this method, the first AP may coordinately allocate communication resources of the first AP and the second AP, so that interference between the first AP and the second AP in a wireless network may be reduced (it should be noted that, when there are a plurality of second APs, the method may further reduce interference between the plurality of second APs). In addition, bandwidths of the first AP and the second AP are unnecessarily limited to two bandwidths independent of each other, and the first AP and the second AP may share communication resources of the wireless network, thereby improving data transmission efficiency of a user.

FIG. 2 is a schematic diagram of an architecture of another data transmission system according to an embodiment of this application. The data transmission system includes one first AP, two second APs, and two STAs. A STA 3 in the two STAs is a STA associated with one of the second APs, and a STA 4 is a STA associated with the other second AP. It should be noted that there may be three, four, or more second APs. This is not limited herein, and only two APs are used as an example.

The first AP may further send a first trigger frame to the two second APs, to trigger the two second APs to perform data transmission with respective associated STAs by using respective allocated communication resources. For example, the first trigger frame may trigger the one second AP to perform, by using an allocated communication resource 1, data transmission with the STA 3 associated with the one second AP, and trigger the other second AP to perform, by using an allocated communication resource 2, data transmission with the STA 4 associated with the other second AP. The first trigger frame includes identification information of the one second AP and resource allocation information indicating the allocated communication resource 1 of the one second AP, and identification information of the other second AP and resource allocation information indicating the allocated communication resource 2 of the other second AP. In this embodiment of this application, a technology in which the first AP and the second APs coordinate to provide services for the stations may be referred to as AP coordinated transmission. According to this method, the first AP may coordinately allocate communication resources of at least two second APs, so that interference between a plurality of second APs in a wireless network may be reduced. In addition, bandwidths of the plurality of second APs are unnecessarily limited to a plurality of bandwidths independent of each other, and the plurality of second APs may share communication resources of the wireless network, thereby improving data transmission efficiency of a user.

A method and a related apparatus according to the embodiments of this application are further described below with reference to accompanying drawings.

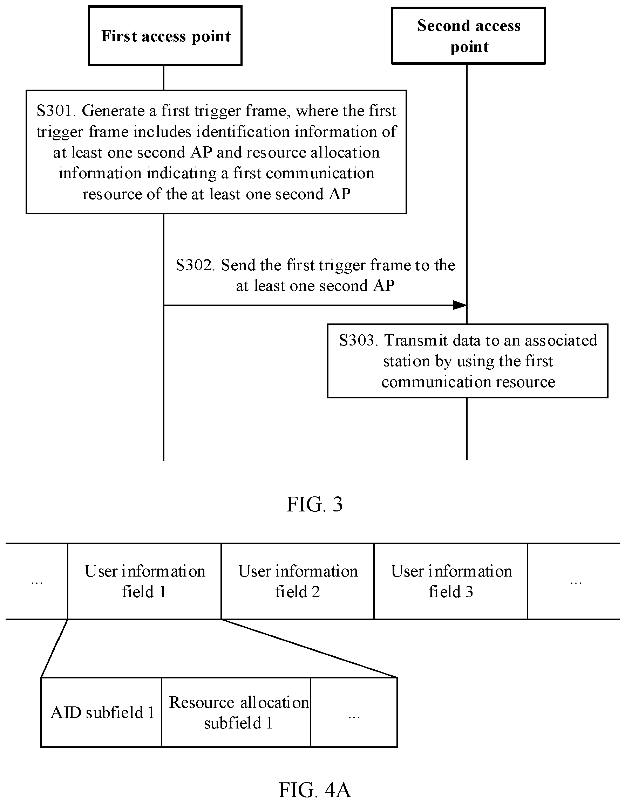

FIG. 3 is a flowchart of a data transmission method according to an embodiment of this application. The method may be implemented based on the architecture shown in FIG. 1 or FIG. 2. A first AP described below may be the first AP in the system architecture shown in FIG. 1 or FIG. 2, and a second AP described below may be the second AP in the system architecture shown in FIG. 1 or FIG. 2. The method includes, but is not limited to, the following steps.

S301. A first access point AP generates a first trigger frame.

The first trigger frame includes identification information of at least one second AP and resource allocation information indicating a first communication resource of the at least one second AP. The first communication resource is used for data transmission between the at least one second AP and an associated station. Specifically, the first trigger frame is used to trigger the at least one second AP to perform data transmission with the associated station by using the first communication resource. Optionally, the first communication resource includes one or more of a resource unit RU, a channel channel, and a spatial flow. The resource unit RU may be a resource unit (resource unit) defined in the 802.11ax standard, or may be a time-frequency resource block (resource block). If the first communication resource indicated in the resource allocation information is a resource unit (resource unit) defined in the 802.11ax standard, coordinated transmission between the first AP and the second AP in this embodiment of this application may be referred to as multi-AP coordinated OFDMA transmission.

Optionally, the first AP may determine, based on a traffic volume of the at least one second AP, a size of the first communication resource that is indicated in the first trigger frame and that is allocated to the at least one second AP. When a traffic volume of a second AP1 in the at least one second AP increases, the first AP may allocate a relatively large communication resource to the second AP1, so that the second AP1 can use a relatively large communication resource or a relatively large number of communication resources, to increase a peak data transmission rate of the second AP1. When the service volume of the second AP1 decreases, the first AP may reduce the communication resource allocated to the second AP1, and provide a relatively small communication resource or a relatively small number of communication resources to another second AP for use. In this manner, communication resources can be flexibly scheduled, and data transmission efficiency of a user can be improved.

Optionally, in the first trigger frame, first communication resources allocated to different second APs indicated in different user information fields may be the same, or may be different. Optionally, the first AP may determine, based on a location relationship of the at least one second AP, the first communication resource that is indicated in the first trigger frame and that is allocated to the at least one second AP. Specifically, communication resources allocated to the second APs at adjacent locations are different from each other, so that communication interference between the second APs at the adjacent locations can be reduced. Communication resources allocated to the at least one second AP with a relatively long distance may be the same, so that communication resource utilization can be improved.

Optionally, the first communication resource may be selected from a communication resource included in a basic service set (basic service set, BSS). A set including the first AP, the at least one second AP, and the associated station is referred to as a basic service set. Optionally, if a bandwidth of the entire BSS is 20 MHz, a 26-tone RU (including 26 subcarriers) may be used as a minimum transmission resource unit for constituting the first communication resource. The minimum transmission resource unit is a minimum unit for constituting the first communication resource. The first AP may select one or more minimum transmission resource units to constitute the first communication resource. If the bandwidth of the entire BSS is greater than 20 MHz (for example, 40 MHz, 80 MHz, 160 MHz, or 320 MHz), a 242-tone RU (or a 20 MHz channel) may be used as a minimum transmission resource unit for constituting the first communication resource. In addition, if the 242-tone RU is used, each second AP may further divide the minimum transmission resource unit that constitutes the first communication resource into smaller resource blocks for serving a station associated with the second AP.

The first trigger frame is further described below.

The first trigger frame includes at least one user information field (field), and one user information field in the at least one user information field corresponds to one second AP in the at least one second AP.

In an example, a user information field includes an AID subfield and a resource allocation subfield, the AID subfield includes identification information of the second AP corresponding to the user information field, and the resource allocation subfield includes resource allocation information of the second AP corresponding to the user information field.

For example, FIG. 4A is a schematic diagram of a user information field in a first trigger frame according to an embodiment of this application. The first trigger frame includes three user information fields: a user information field 1, a user information field 2, and a user information field 3. The three user information fields in the first trigger frame correspond to three second APs. Specifically, the user information field 1 corresponds to a second AP1, the user information field 2 corresponds to a second AP2, and the user information field 3 corresponds to a second AP3. The user information field 1 corresponding to the second AP1 is used as an example for further description. The user information field 1 includes an AID subfield 1 and a resource allocation subfield 1. The AID subfield 1 includes identification information of the second AP1 corresponding to the user information field 1. The resource allocation subfield 1 includes resource allocation information of the second AP1 corresponding to the user information field 1. For example, the resource allocation information of the second AP1 may be information indicating a bandwidth of 20 MHz. In addition, the user information field 2 corresponding to the second AP2 and the user information field 3 corresponding to the second AP3 may have similar structures, and details are not described herein again.

In another example, a user information field includes an AID subfield, a first subfield, and a resource allocation subfield, the AID subfield is a preset AID value, the first subfield includes identification information of the second AP corresponding to the user information field, and the resource allocation subfield includes resource allocation information of the second AP. The AID value is a preset value, the preset value may be a special AID value, and the AID value may be an AID that is not defined or not allocated. The AID value indicates that the identification information of the second AP corresponding to the user information field is carried in the first subfield of the user information field.

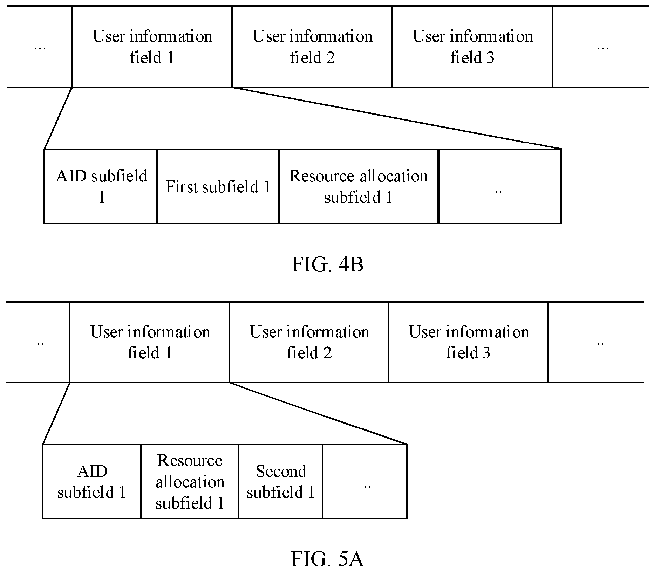

For example, FIG. 4B is a schematic diagram of a user information field in another first trigger frame according to an embodiment of this application. The first trigger frame includes three user information fields: a user information field 1, a user information field 2, and a user information field 3. The three user information fields in the first trigger frame correspond to three second APs. The user information field 1 corresponding to a second AP1 is used as an example for further description. The user information field 1 includes an AID subfield 1, a resource allocation subfield 1, and a first subfield. The AID subfield 1 is a special AID value, the resource allocation subfield 1 includes resource allocation information of the second AP1 corresponding to the user information field 1, and the first subfield carries identification information of the second AP corresponding to the user information field.

The identification information of the second AP may be indicated in a plurality of manners. The following describes three manners for indicating the identification information of the second AP.

In a first manner, the identification information of the second AP is generated by using a media access control MAC address of the second AP. Optionally, the identification information of the second AP may be 12 consecutive characters selected from the MAC address of the second AP. Optionally, the identification information of the second AP may alternatively be calculated after the MAC address of the second AP is substituted into a predefined function. Optionally, the identification information of the second AP may alternatively be obtained through a predefined mapping of the MAC address of the second AP.

In a second manner, the identification information of the second AP is an association identifier of a backhaul station (backhaul STA) included in a device to which the second AP belongs. In this manner, the backhaul station is a station associated with the first AP.

In a third manner, the identification information of the second AP may be a MAC address of the second AP, or may be an ID of the second AP, a basic service set color BSS color of a BSS in which the second AP is located, or the like.

It should be noted that, the plurality of implementations of the identification information of the second AP are not limited to the case in which the first AP indicates the communication resource to the second AP in this embodiment of this application, and may also be applicable to a case in which the first AP indicates other scheduling information or signaling information to the second AP.

S302. The first AP sends the first trigger frame to the at least one second AP.

In a possible implementation, the first AP may further send a temporary primary channel identifier to the at least one second AP. The temporary primary channel identifier is used to indicate a primary channel used by the second AP to perform data transmission with the associated station. The following describes a plurality of manners in which the first AP may send the temporary primary channel identifier to the at least one second AP.

In a first manner, the temporary primary channel identifier is carried in a user information field of the first trigger frame. In this case, the temporary primary channel identifier is used to indicate a primary channel used by a second AP corresponding to the user information field to perform data transmission with an associated station.

In an example, the user information field of the first trigger frame further includes a second subfield, and the second subfield carries the temporary primary channel identifier. For example, FIG. 5A is a schematic diagram of a user information field in another first trigger frame according to an embodiment of this application. A user information field 1 corresponding to a second AP1 includes an AID subfield 1, a resource allocation subfield 1, and a second subfield 1. The AID subfield 1 includes identification information of the second AP1. The resource allocation subfield 1 includes resource allocation information of the second AP1. The second subfield 1 carries a temporary primary channel identifier 1. The temporary primary channel identifier 1 is used to indicate a primary channel used by the second AP1 to perform data transmission with an associated station. It should be noted that a location of the second subfield in the user information field 1 may be changed.

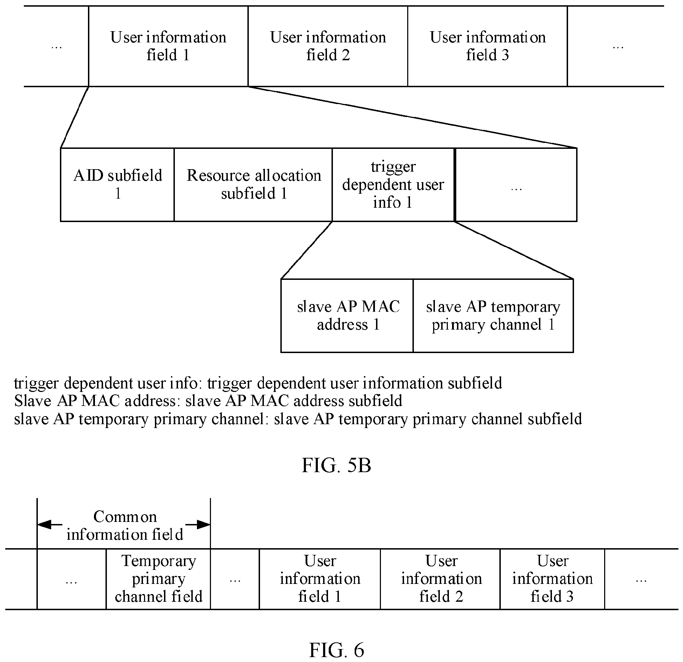

In a possible implementation, the second subfield may be "trigger dependent user info", and the temporary primary channel identifier is carried in the subfield. The "trigger dependent user info" subfield includes a "slave AP MAC address" subfield and a "slave AP temporary primary channel" subfield. The "slave AP MAC address" subfield is used to carry a MAC address of a second access point, and the "slave AP temporary primary channel" subfield is used to carry a temporary primary channel identifier corresponding to the second access point. For example, FIG. 5B is a schematic diagram of a second subfield in a user information field according to an embodiment of this application. FIG. 5B shows a "trigger dependent user info 1" subfield further included in the user information field 1. It may be understood that, similar to the user information field 1, a user information field 2 further includes a "trigger dependent user info 2" subfield, and a user information field 3 further includes a "trigger dependent user info 3" subfield. Description is made by using "trigger dependent user info 1" included in the user information field 1 of the second AP1 as an example. The "trigger dependent user info 1" includes a "slave AP MAC address 1" subfield that carries a MAC address of the second AP1, and a "slave AP temporary primary channel 1" subfield that carries a temporary primary channel identifier corresponding to the second AP1. It should be noted that, names of the second subfield and the subfields included in the second subfield that are described above are not limited in this embodiment of this application, and other names may be used as required.

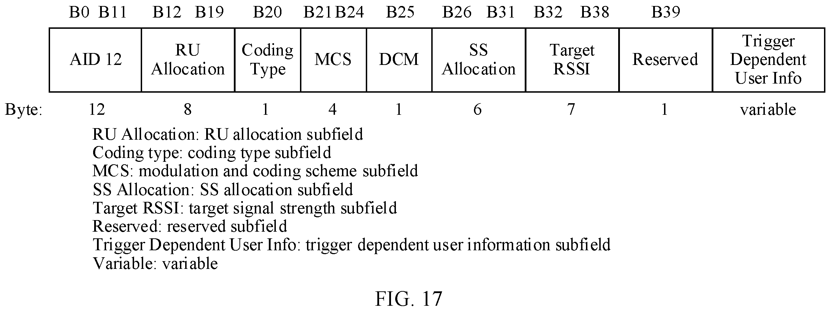

Optionally, the user information field shown in FIG. 4A to FIG. 5B may further include another subfield, and an order of a plurality of subfields included in the user information field may be changed. This is not specifically limited in this embodiment of this application. For example, other subfields such as a coding type (Coding type) subfield and a modulation and coding scheme (MCS) subfield in FIG. 17 are included.

In a second manner, if a same primary channel is used by the at least one second AP to perform data transmission with the associated station, the temporary primary channel identifier may alternatively be carried in a common information field of the first trigger frame. Optionally, the common information field includes a temporary primary channel subfield, and the temporary primary channel subfield carries the temporary primary channel identifier. The at least one second AP may perform data transmission by using the primary channel indicated by the temporary primary channel identifier. For example, FIG. 6 is a schematic diagram of a common information field in a first trigger frame according to an embodiment of this application. The common information field of the first trigger frame includes a temporary primary channel subfield, and the temporary primary channel subfield carries a temporary primary channel identifier 1. A second AP1, a second AP2, and a second AP3 corresponding to the user information field all may perform data transmission with respective associated stations by using a primary channel indicated by the temporary primary channel identifier 1.

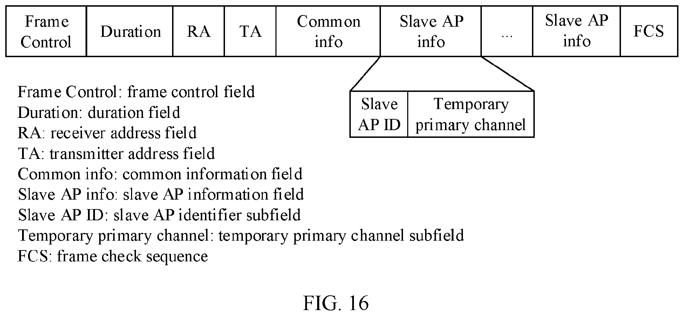

In a third manner, the first AP may separately send the temporary primary channel identifier to the at least one second AP. Optionally, a temporary primary channel of each of the at least one second AP may be predefined before transmission. For example, the first AP may send indication information to the second AP in advance, and the indication information includes the temporary primary channel identifier. Optionally, alternatively, the second AP may send, to the first AP, request information for requesting a temporary primary channel. After receiving the request information, the first AP sends indication information to the second AP. The indication information includes the temporary primary channel identifier. FIG. 16 is a schematic diagram of a frame structure that carries a temporary primary channel identifier according to an embodiment of this application, including: a frame control (Frame control) field, a duration (duration) field, a receiver address (receiver address, RA) field, a transmitter address (transmitter address, TA) field, a common information (Common info) field, and a plurality of slave AP information fields. It is assumed that the first AP in the foregoing embodiment is a master AP and the second AP is a slave AP. In this case, the slave AP information (slave AP info) field includes identification information of the slave AP and identification information of a temporary primary channel.

In a fourth manner, the temporary primary channel identifier may alternatively be carried in a preamble of a physical layer protocol data unit (physical layer protocol data unit, PPDU) sent by the first AP to the at least one second AP. Optionally, the PPDU includes a temporary primary channel field, the temporary primary channel field is located in the preamble of the PPDU, and the temporary primary channel identifier is carried in the temporary primary channel field.

The first trigger frame sent by the first AP is used to trigger the at least one second AP to perform data transmission with the associated station by using the first communication resource. The data transmission may include two cases: In a first case, the second AP performs downlink data transmission with the associated STA, that is, the second AP sends a downlink data frame to the associated STA. In a second case, the second AP triggers the associated STA to perform uplink data transmission, that is, the second AP triggers the associated STA to send an uplink data frame. The two cases are separately described below.

First case: The data transmission includes downlink data transmission, that is, the second AP sends a downlink data frame. The first trigger frame further includes a common information field, and the common information field includes a transmission parameter of a downlink data frame sent by the at least one second AP in the downlink data transmission. The transmission parameter of the downlink data frame includes one or more of a length of the downlink data frame, a guard interval (guard interval, GI) and a long training field (long training field, LTF) used in the downlink data frame, a quantity of high efficiency long training field (High efficiency long training field, HE-LTF) symbols included in the downlink data frame, whether a space-time block code (space-time block code, STBC) is used in the downlink data frame, information about whether the downlink data frame has an extra symbol segment encoded by a low density parity check code (low density parity check code, LDPC), a length of a packet extension (packet extension, PE) used in the downlink data frame, and information about whether the downlink data frame has a mid-amble (mid-amble).

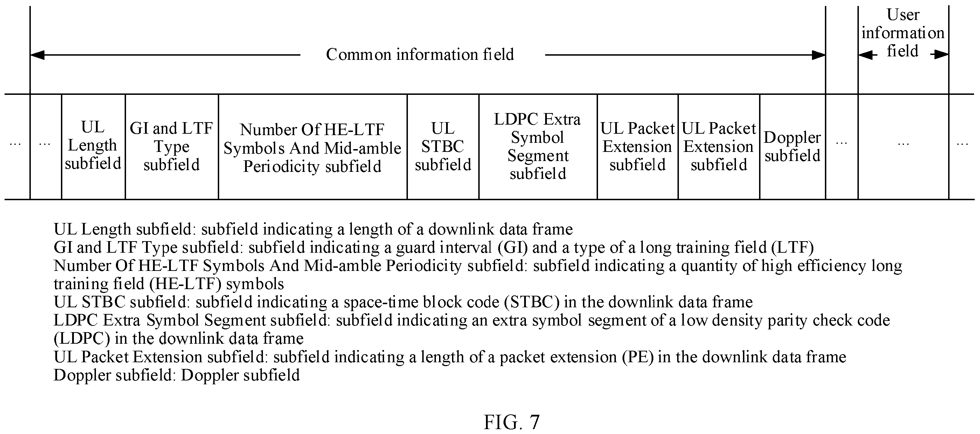

Optionally, the data transmission parameters of the downlink data frame may be carried in a plurality of subfields of the common information field. FIG. 7 is a schematic diagram of a common information field in a first trigger frame according to an embodiment of this application. The plurality of subfields are specifically described below with reference to FIG. 7.

A UL Length subfield may carry the information about the length of the downlink data frame. Specifically, the length of the downlink data frame is a value of a Length field of a legacy preamble part of the downlink data frame. Optionally, if a downlink data frame that the second AP needs to send to the associated station does not reach the length of the downlink data frame, a padding bit needs to be added behind data in the downlink data frame, so that the length of the sent downlink data frame reaches the length of the downlink data frame.

A GI and LTF Type subfield may carry the information about the guard interval GI and the type of the long training field LTF used in the downlink data frame.

A Number Of HE-LTF Symbols And Mid-amble Periodicity subfield may carry the information about a quantity of high efficiency long training field HE-LTF symbols included in the downlink data frame.

A UL STBC subfield may carry the information about whether a space-time block code (Space-Time Block Code, STBC) is used in the downlink data frame.

An LDPC Extra Symbol Segment subfield may carry the information about whether the downlink data frame has an extra symbol segment encoded by a low density parity check code (Low Density Parity Check Code, LDPC).

A UL Packet Extension subfield may carry the information about the length of the PE used in the downlink data frame.

A Doppler subfield may carry the information about whether the downlink data frame has a mid-amble.

Second case: The data transmission includes uplink data transmission, that is, the second AP triggers the STA to send an uplink data frame. The first trigger frame further includes a common information field, and the common information field includes a transmission parameter of an uplink data frame sent by the associated station in the uplink data transmission. The transmission parameter of the uplink data frame includes one or more of a length of the uplink data frame, a GI and a type of an LTF used in the uplink data frame, a quantity of HE-LTF symbols included in the uplink data frame, whether an STBC is used in the uplink data frame, information about whether the uplink data frame has an extra symbol segment encoded by an LDPC, a length of a PE used in the uplink data frame, and information about whether the uplink data frame has a mid-amble.

Optionally, the data transmission parameters of the uplink data frame may be carried in a plurality of subfields of the common information field. It should be noted that in this case, the first trigger frame may still use a frame format similar to that of the first trigger frame shown in FIG. 7. However, in this case, the subfields represent different meanings. The plurality of subfields are specifically described below with reference to FIG. 7.

A UL Length subfield may carry the information about the length of the uplink data frame. Specifically, the length of the uplink data frame is a value of a Length field of a legacy preamble part of the uplink data frame. Optionally, if an uplink data frame that the associated station needs to send to the second AP does not reach the length of the uplink data frame, a padding bit needs to be added behind data in the uplink data frame, so that the length of the sent uplink data frame reaches the length of the uplink data frame.

A GI and LTF Type subfield may carry the information about the guard interval GI and the type of the long training field LTF used in the uplink data frame.

A Number Of HE-LTF Symbols And Mid-amble Periodicity subfield may carry the information about a quantity of high efficiency long training field HE-LTF symbols included in the uplink data frame.

A UL STBC subfield may carry the information about whether an STBC is used in the uplink data frame.

An LDPC Extra Symbol Segment subfield may carry the information about whether the uplink data frame has an extra symbol segment encoded by an LDPC.

A UL Packet Extension subfield may carry the information about the length of the PE used in the uplink data frame.

A Doppler subfield may carry the information about whether the uplink data frame has a mid-amble.

In another possible implementation, the common information field further includes one or more of information indicating whether the first access point continues to send a next first trigger frame, information indicating whether a channel is idle needs to be detected before the data transmission is performed, and information indicating whether the second access point performs uplink data transmission or downlink data transmission with the associated station.

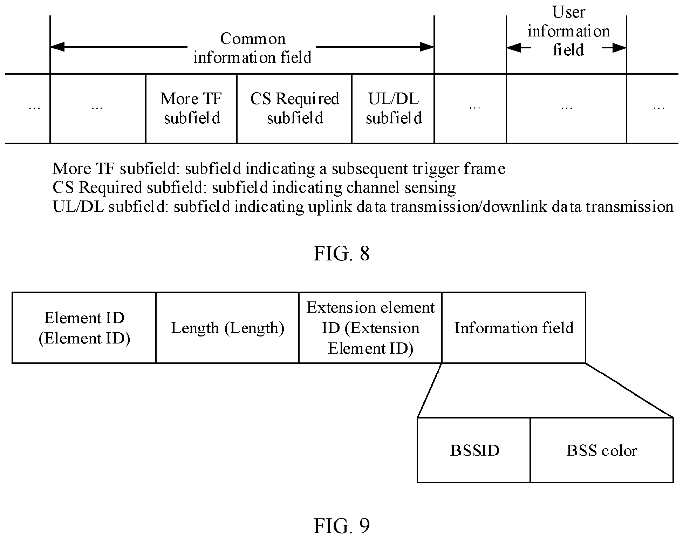

Optionally, the indication information may be carried in a plurality of subfields of the common information field. FIG. 8 is a schematic diagram of a common information field in another first trigger frame according to an embodiment of this application. The plurality of subfields are specifically described below with reference to FIG. 8.

A More TF subfield may carry the information indicating whether the first AP subsequently sends another first trigger frame. Optionally, when the subfield is a first value, it indicates that the first AP subsequently sends another first trigger frame. When the field is a second value, it indicates that the first AP does not send another first trigger frame subsequently.

A CS Required subfield may carry the information indicating whether a channel is idle needs to be detected before the data transmission is performed. Optionally, when the subfield is a third value, it indicates that whether the channel is idle needs to be detected. If a detection result is that the channel is busy, the data transmission cannot be performed. If the detection result is that the channel is idle, the data transmission may be performed. When the subfield is a fourth value, it indicates that whether the channel is idle does not need to be detected. In other words, the data transmission may be performed regardless of whether the channel is idle. A method for detecting whether the channel is idle may include physical carrier sensing and virtual carrier sensing.

A UL/DL subfield may carry the information indicating whether the second access point performs uplink data transmission or downlink data transmission with the associated station. Optionally, when the subfield is a fifth value, it indicates that the second access point performs uplink data transmission with the associated station. When the subfield is a sixth value, it indicates that the second access point performs downlink data transmission with the associated station.

In addition, the common information field of the first trigger frame may further include a "type dependent common info" subfield. The subfield indicates a type of the first trigger frame. For example, when the subfield is a seventh value, the first trigger frame triggers the at least one second AP to perform data transmission in the manner in this embodiment. When the subfield is an eighth value, the first trigger frame triggers the at least one second AP to perform data transmission in another manner.

It should be noted that, in the content of the fields included in the first trigger frame described above, names of the fields are merely examples, and the names of the fields may be adjusted as required. This is not limited herein. In addition, the order and the number of fields in the first trigger frame shown in the foregoing schematic diagram may be adjusted as required. This is not limited herein.

After the first AP sends the first trigger frame to the at least one second AP, the at least one second AP receives the first trigger frame. An operation performed after the second AP receives the first trigger frame is described below by using one AP in the at least one AP as an example.

S303. After the second AP receives the first trigger frame, the second AP performs data transmission with the associated station by using the first communication resource.

Optionally, the second AP may obtain the resource allocation information of the first communication resource of the second AP from the first trigger frame based on the identification information of the second AP. For example, the second AP1 may parse out the user information field 1 in the first trigger frame according to the identification information of the second AP1, and then obtain the resource allocation information of the first communication resource of the second AP1 based on the resource allocation subfield 1 of the user information field 1. It should be noted that, if the first trigger frame includes the temporary primary channel identifier, the second AP may further obtain, from the first trigger frame, information about the primary channel used by the second AP to perform data transmission with the associated station.

There are two manners of performing, by the second AP, data transmission with the associated station by using the first communication resource. The two manners are described below.

In a first manner, the data transmission includes downlink data transmission, and the first trigger frame is used to trigger the second AP to perform downlink data transmission with the associated station by using the first communication resource. A manner of performing, by the second AP, data transmission with the associated station by using the first communication resource is sending, by the second AP, a downlink data frame to the associated station by using the first communication resource.

It should be noted that, when the second AP sends the downlink data frame to the associated station by using the first communication resource, the downlink data frame needs to meet a requirement that is indicated in the first trigger frame and that is on a data transmission parameter of the downlink data frame, and a requirement included in the indication information. For example, the first trigger frame includes the UL Length subfield, and the subfield indicates a requirement on a length of the downlink data frame. In this case, if the downlink data frame that the second AP needs to send to the associated station does not reach the length of the downlink data frame, a padding bit needs to be added behind data in the downlink data frame, so that the length of the sent downlink data frame reaches the length of the downlink data frame. For another example, the first trigger frame includes the CS Required subfield, and the subfield is the third value, which indicates that whether a channel is idle needs to be detected before the downlink data transmission is performed. In this case, before sending the data frame to the associated station, the second AP needs to detect whether the channel is idle. If a detection result is that the channel is busy, the data transmission cannot be performed. If the detection result is that the channel is idle, the data transmission may be performed.

In a second manner, the data transmission includes uplink data transmission, and the first trigger frame is used to trigger the second AP to perform uplink data transmission with the associated station by using the first communication resource. The performing, by the second AP, data transmission with the associated station by using the first communication resource includes: sending, by the second AP, a second trigger frame to the associated station, where the second trigger frame includes identification information of the associated station and resource allocation information indicating a second communication resource of the associated station; and receiving, by the second AP, the uplink data frame from the associated station.

The second communication resource is a communication resource that is in the first communication resource and that is used by the associated station to send a data frame to the second AP, and the second trigger frame is used to trigger the associated station to send an uplink data frame to the second AP. Optionally, the second AP may determine, based on a traffic volume of each station associated with the second AP, a second communication resource that is in the first communication resource and that is allocated to each associated station.

In this manner, the common information field of the first trigger frame may further include length information of the second trigger frame. Optionally, the length information of the second trigger frame may be carried in a "Trigger Length" subfield in the common information field. The subfield may alternatively be named in another manner. This is not limited herein.

Optionally, the second trigger frame includes at least one user information field, and one user information field in the at least one user information field corresponds to one associated station in the associated stations. The user information field corresponding to the one associated station includes an AID subfield and a resource allocation subfield, the AID subfield includes identification information of the one associated station, and the resource allocation subfield includes resource allocation information of the one associated station.

In an optional implementation, the second trigger frame further includes a common information field, and the common information field includes a transmission parameter of the uplink data frame. The transmission parameter of the uplink data frame includes one or more of a length of the uplink data frame, a GI and a type of an LTF used in the uplink data frame, a quantity of HE-LTF symbols included in the uplink data frame, whether a space-time block code STBC is used in the uplink data frame, information about whether the uplink data frame has an extra symbol segment encoded by an LDPC, a length of a PE used in the uplink data frame, and information about whether the uplink data frame has a mid-amble.

In another optional implementation, the common information field further includes information indicating whether the second access point continues to send a next second trigger frame, and information indicating whether a channel is idle needs to be detected before the data transmission is performed.

It should be noted that, when the associated station sends the uplink data frame to the second AP by using the second communication resource, the uplink data frame needs to meet a requirement that is indicated in the first trigger frame and that is on a data transmission parameter of the uplink data frame, and a requirement included in the indication information. For example, the first trigger frame includes the UL Length subfield, and the subfield indicates a requirement on a length of the uplink data frame. In this case, if the uplink data frame that the associated station needs to send to the second AP does not reach the length of the uplink data frame, a padding bit needs to be added behind data in the uplink data frame, so that the length of the sent uplink data frame reaches the length of the uplink data frame. For another example, the first trigger frame includes the CS Required subfield, and the subfield is the third value, which indicates that whether a channel is idle needs to be detected before the uplink data transmission is performed. In this case, before sending the data frame to the second AP, the associated station needs to detect whether the channel is idle. If a detection result is that the channel is busy, the data transmission cannot be performed. If the detection result is that the channel is idle, the data transmission may be performed.

In another possible implementation, the method may further include: sending, by the second AP, temporary primary channel announcement information to the associated station, where the temporary primary channel announcement information includes an identifier of the second AP and the temporary primary channel identifier. The temporary primary channel identifier is used to indicate the primary channel used by the second AP to perform data transmission with the associated station. The second AP may obtain the temporary primary channel identifier from the first AP. Specifically, for a manner in which the first AP sends the temporary primary channel identifier to the second AP, refer to the manner described in step S302. Details are not described herein again.

The identifier of the second AP may be a MAC address of the second AP, or may be an identifier agreed upon by the second AP and the station associated with the second AP. Optionally, the temporary primary channel announcement information sent by the second AP to the associated station may be carried in a plurality of manners. For example, the temporary primary channel announcement information is carried in a management frame sent by the second AP to the associated station, and the management frame includes one or more of a beacon frame, an association response frame, a re-association response frame, and a probe response frame. Alternatively, the temporary primary channel announcement information may be carried in a preamble of a PPDU sent by the second AP to the associated station. Optionally, the PPDU includes a temporary primary channel field, the temporary primary channel field is located in the preamble of the PPDU, and the temporary primary channel identifier is carried in the temporary primary channel field.

Optionally, after the station receives the temporary primary channel announcement information, the station switches to the primary channel indicated by the temporary primary channel identifier, and listens to information sent by the second AP to the station. The information may be a downlink data frame sent by the second AP to the station, or may be a second trigger frame sent by the second AP to the station.

In the method in this embodiment of this application, the first access point AP may send the first trigger frame to the at least one second AP. The first trigger frame includes the identification information of the at least one second AP and the resource allocation information indicating the first communication resource of the at least one second AP. In addition, the at least one second AP may be triggered to perform data transmission with the associated station by using the first communication resource. In this manner, the first AP may coordinately allocate the communication resource of the at least one second AP, thereby improving data transmission efficiency of a user while reducing interference in a wireless network.

An embodiment of this application provides a communication method of multi-AP coordinated transmission. A device on which at least one or each of a plurality of APs is located establishes two BSSs, the two BSSs include a first BSS and a second BSS, the first BSS may be used for coordinated transmission between the plurality of APs, for example, multi-AP coordinated transmission in this embodiment of this application, and the second BSS is used for normal or conventional data transmission.

In an optional implementation, the first AP is included in two basic service sets, the two basic service sets include a first basic service set BSS and a second BSS, and the first BSS further includes the at least one second AP. The method further includes: sending, by the first AP, coordinated transmission information to a station in the second BSS, where the coordinated transmission information includes a basic service set identifier BSSID of the first BSS and a basic service set color BSS color of the first BSS.

Optionally, the coordinated transmission information may be included in an information unit, and the information unit may be carried in one or more of a beacon frame, an association response frame, a re-association response frame, and a probe response frame that are sent by the AP in the second BSS. FIG. 9 is a schematic diagram of an information unit according to an embodiment of this application.

During network access, a station may join the wireless network by using the conventional second BSS, and may obtain information about the first BSS by using coordinated transmission information in the second BSS. When the station performs data transmission by using the solution provided in this embodiment of this application, the data transmission is performed in a separate and same first BSS. Because transmission parameters of data frames in a same BSS are the same, interference between users can be further reduced in this manner.

Using two APs as an example, a first AP (such as an AP1) device establishes two BSSs (a BSS1 and a BSS2), and a second AP (such as an AP2) device also establishes two BSSs (the BSS1 and a BSS3). It should be noted that the two AP devices are both in the BSS1, and the BSS1 is also a BSS used for coordinated OFDMA transmission.

During network access, a STA may join the network by using a conventional BSS, for example, the BSS2 or the BSS3, and obtain information about the BSS1 by using the BSS2 or the BSS3. Specifically, in a beacon frame of the BSS2, the AP1 broadcasts related information of the BSS1 used for multi-AP coordinated transmission. The information includes a BSSID of the BSS1 and/or a BSS color of the BSS1. Optionally, in a beacon frame of the BSS3, the AP2 broadcasts related information of the BSS1 used for multi-AP coordinated transmission. The information includes the BSSID of the BSS1 and/or the BSS color of the BSS1. The STA may obtain information about the BSS1 by using the coordinated transmission information in the BSS2 and/or the BSS3.

After the plurality of APs establish the BSS1 used for coordinated OFDMA transmission, the BSSID of the BSS1 and the BSS color of the BSS1 may be added to a sent data frame in subsequent coordinated OFDMA data transmission, to indicate that the sent data frame is a data frame in coordinated OFDMA transmission.

This embodiment of this application proposes a new multi-AP coordinated transmission architecture, so that multi-AP coordinated transmission is performed in a separate (and same) BSS, thereby facilitating uniform parameter settings (for example, a BSSID and a BSS color).

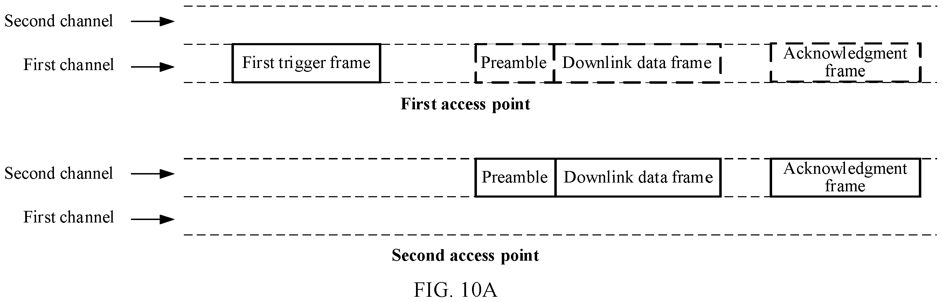

An implementation scenario in which the first trigger frame triggers the second AP to perform downlink data transmission with the associated station is described below with reference to accompanying drawings. FIG. 10A is a schematic diagram in which a first trigger frame triggers a second AP to perform downlink data transmission with an associated station according to an embodiment of this application. Communication resources that can be allocated by the first AP include a first channel and a second channel.

First, the first AP sends the first trigger frame to the second AP on the first channel. The first trigger frame includes the identification information of the second AP and the resource allocation information indicating the first communication resource of the second AP. Optionally, the temporary primary channel identifier is further included. The first trigger frame is used to trigger the second AP to perform downlink data transmission with the associated station by using the first communication resource. The first channel is a communication resource allocated by the first AP to the first AP. The first communication resource allocated by the first AP to the second AP is the second channel, and the primary channel indicated by the temporary primary channel identifier and used by the second AP to perform data transmission with the associated station is the second channel.

Then, the second AP receives the first trigger frame, and the second AP may obtain the resource allocation information of the first communication resource of the second AP from the first trigger frame based on the identification information of the second AP. In addition, the second AP determines, from the first trigger frame, that the primary channel used by the second AP to perform data transmission with the associated station is the second channel. Then, the second AP performs downlink data transmission with the associated station by using the first communication resource. That is, the second AP may send a downlink data frame to the associated station on the second channel (the temporary primary channel). Optionally, after the second AP successfully sends the downlink data frame to the station associated with the second AP, the second AP may receive an acknowledgment frame sent by the associated station.

In a possible implementation, the first AP may also send a downlink data frame to a station associated with the first AP. Specifically, the first AP may send, on the first channel, the downlink data frame to the station associated with the first AP. Optionally, after the first AP successfully sends the downlink data frame to the station associated with the first AP, the first AP may receive an acknowledgment frame sent by the station associated with the first AP.

The figure illustrates this possible case in a form of a dashed line box.

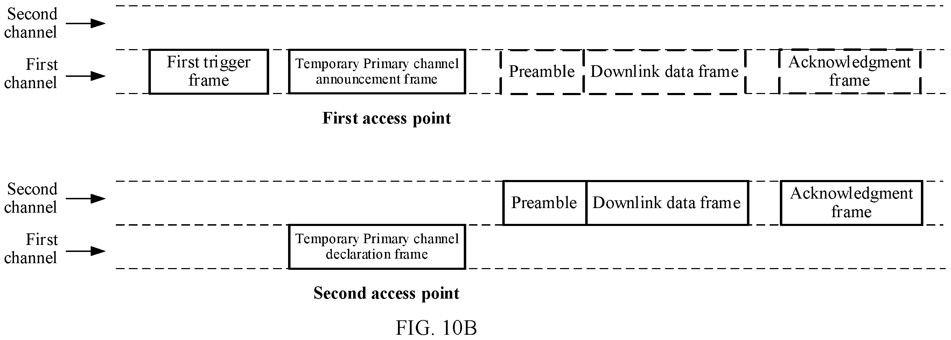

FIG. 10B is another schematic diagram in which a first trigger frame triggers a second AP to perform downlink data transmission with an associated station according to an embodiment of this application. Communication resources that can be allocated by the first AP include a first channel and a second channel.

First, the first AP sends the first trigger frame to the second AP on the first channel. The first trigger frame includes the identification information of the second AP and the resource allocation information indicating the first communication resource of the second AP. The first trigger frame is used to trigger the second AP to perform downlink data transmission with the associated station by using the first communication resource. The first channel is a communication resource allocated by the first AP to the first AP. The first communication resource allocated by the first AP to the second AP is the second channel.

Optionally, the first AP further sends a temporary primary channel announcement frame to the second AP on the first channel. The temporary primary channel announcement frame carries the temporary primary channel identifier. The temporary primary channel identifier indicates that the primary channel used by the second AP to perform data transmission with the associated station is the second channel. The temporary primary channel announcement frame may use the frame structure shown in FIG. 16, and details are not described herein again.

Next, the second AP receives the first trigger frame and the temporary primary channel announcement frame, and the second AP may obtain the resource allocation information of the first communication resource of the second AP from the first trigger frame based on the identification information of the second AP. In addition, the second AP determines, from the temporary primary channel announcement frame, that the primary channel used by the second AP to perform data transmission with the associated station is the second channel.

Then, the second AP performs downlink data transmission with the associated station by using the first communication resource. That is, the second AP may send a downlink data frame to the associated station on the second channel (the temporary primary channel). Optionally, if the temporary primary channel is different from a channel used by the second AP to perform data transmission with the associated station before the temporary primary channel announcement frame is received, the second AP may further send, on the channel used for the previous data transmission, a temporary primary channel frame to the station associated with the second AP. The figure illustrates that the channel used for the previous data transmission is the first channel, and the figure illustrates this possible case in a form of a dashed line box. Optionally, after the second AP successfully sends the downlink data frame to the station associated with the second AP, the second AP may receive an acknowledgment frame sent by the associated station.

In a possible implementation, the first AP may also send a downlink data frame to a station associated with the first AP. Specifically, the first AP may send, on the first channel, the downlink data frame to the station associated with the first AP. The figure illustrates this possible case in a form of a dashed line box. Optionally, after the first AP successfully sends the downlink data frame to the station associated with the first AP, the first AP may receive an acknowledgment frame sent by the station associated with the first AP.

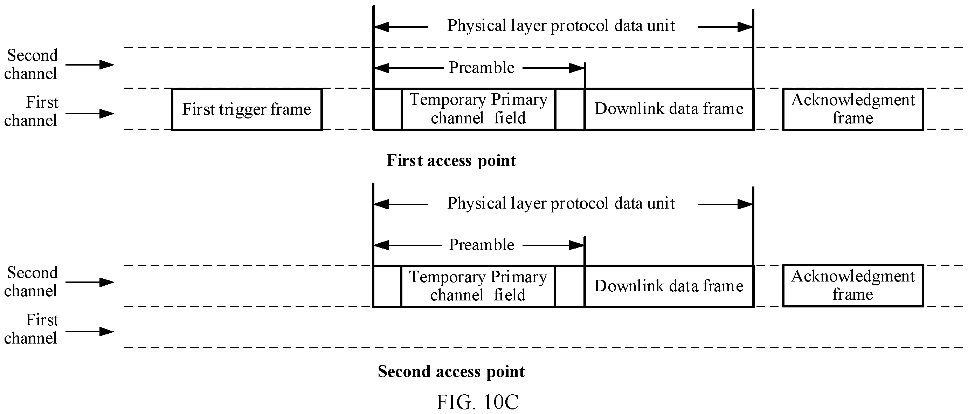

FIG. 10C is another schematic diagram in which a first trigger frame triggers a second AP to perform downlink data transmission with an associated station according to an embodiment of this application. Communication resources that can be allocated by the first AP include a first channel and a second channel.

First, the first AP sends the first trigger frame to the second AP on the first channel. The first trigger frame includes the identification information of the second AP and the resource allocation information indicating the first communication resource of the second AP. The first trigger frame is used to trigger the second AP to perform downlink data transmission with the associated station by using the first communication resource. The first channel is a communication resource allocated by the first AP to the first AP. The first communication resource allocated by the first AP to the second AP is the second channel.

Then, the first AP sends, to the second AP on the first channel, a physical layer protocol data unit including the temporary primary channel identifier. The physical layer protocol data unit further includes a downlink data frame. The temporary primary channel identifier may be located in a preamble of the physical layer protocol data unit. The temporary primary channel identifier is carried in a temporary primary channel field. The temporary primary channel identifier indicates that the primary channel used by the second AP to perform data transmission with the associated station is the second channel. Optionally, after the first AP successfully sends the downlink data frame to the second AP, the first AP may receive an acknowledgment frame sent by the second AP.

Next, the second AP receives the first trigger frame and the data frame, and the second AP may obtain the resource allocation information of the first communication resource of the second AP from the first trigger frame based on the identification information of the second AP. In addition, the second AP determines, from the data frame, that the primary channel used by the second AP to perform data transmission with the associated station is the second channel.

Then, the second AP performs downlink data transmission with the associated station by using the first communication resource. That is, the second AP may send a downlink data frame to the associated station on the second channel (the temporary primary channel). Optionally, after the second AP successfully sends the downlink data frame to the station associated with the second AP, the second AP may receive an acknowledgment frame sent by the associated station.

It should be noted that FIG. 10A to FIG. 10C are described by using an example in which the first communication resource is the second channel. It may be understood that the first communication resource allocated by the first AP to the second AP may be some or all resource units in the second channel.

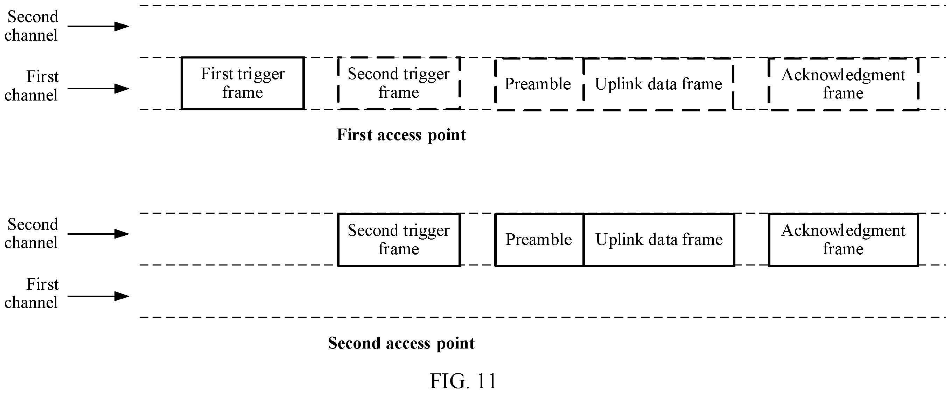

FIG. 11 is a schematic diagram in which a first trigger frame triggers a second AP to perform uplink data transmission with an associated station according to an embodiment of this application. Communication resources that can be allocated by the first AP include a first channel and a second channel.

First, the first AP sends the first trigger frame to the second AP on the first channel. The first trigger frame includes the identification information of the second AP, the resource allocation information indicating the first communication resource of the second AP, and the temporary primary channel identifier. The first trigger frame is used to trigger the second AP to perform uplink data transmission with the associated station by using the first communication resource. The first channel is a communication resource allocated by the first AP to the first AP. The first communication resource allocated by the first AP to the second AP is the second channel, and the primary channel indicated by the temporary primary channel identifier and used by the second AP to perform data transmission with the associated station is the second channel. It should be noted that, for a manner in which the first AP sends the temporary primary channel identifier to the second AP, refer to the manners described in FIG. 10B and FIG. 10C. The manner described in FIG. 10A is used as an example herein.

Next, the second AP receives the first trigger frame, and the second AP may obtain the resource allocation information of the first communication resource of the second AP from the first trigger frame based on the identification information of the second AP. In addition, the second AP determines, from the first trigger frame, that the primary channel used by the second AP to perform data transmission with the associated station is the second channel.

Then, the second AP performs uplink data transmission with the associated station by using the first communication resource. That is, the second AP may send a second trigger frame to the associated station on the second channel (the temporary primary channel), and then receive, on the second channel, an uplink data frame sent by the associated station. Optionally, after the second AP successfully receives the uplink data frame from the station associated with the second AP, the second AP may send an acknowledgment frame to the station associated with the second AP.

In a possible implementation, the first AP may also send a second trigger frame to a station associated with the first AP, so that the station associated with the first AP sends an uplink data frame to the first AP. The figure illustrates this possible case in a form of a dashed line box. Optionally, after the first AP successfully receives the uplink data frame from the station associated with the first AP, the first AP may send an acknowledgment frame to the station associated with the first AP.

It should be noted that FIG. 10A to FIG. 10C are described by using an example in which the first communication resource is the second channel. It may be understood that the first communication resource allocated by the first AP to the second AP may be some or all resource units in the second channel.

In the implementation scenarios shown in FIG. 10A to FIG. 10C and FIG. 11, the first access point AP may send the first trigger frame to the at least one second AP. The first trigger frame includes the identification information of the at least one second AP and the resource allocation information indicating the first communication resource of the at least one second AP. In addition, the at least one second AP may be triggered to perform data transmission with the associated station by using the first communication resource. In this manner, the first AP may coordinately allocate the communication resource of the at least one second AP, thereby improving data transmission efficiency of a user while reducing interference in a wireless network.

The foregoing describes the method embodiments of this application, and the following describes corresponding apparatus embodiments.

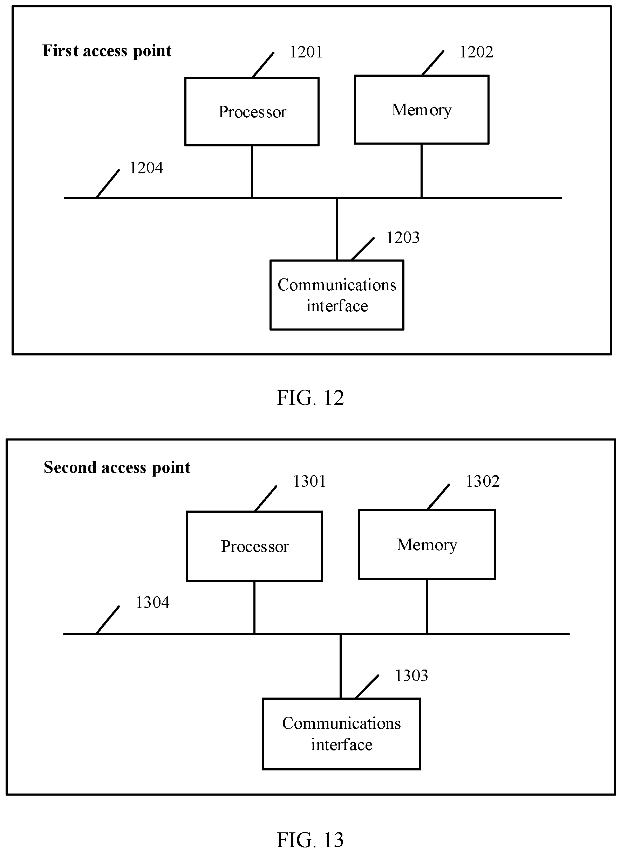

FIG. 12 is a schematic diagram of a first access point according to an embodiment of this application. The first access point includes a processor 1201, a memory 1202, and a communications interface 1203. The processor 1201, the memory 1202, and the communications interface 1203 are connected to each other by using a bus 1204.

The memory 1202 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1202 is configured to store related instructions and data.

The processor 1201 may be one or more central processing units (central processing unit, CPU). When the processor 1201 is one CPU, the CPU may be a single-core CPU, or may be a multi-core CPU.

The processor 1201 in the first access point is configured to read program code stored in the memory 1202, to perform the following operations:
generating a first trigger frame, where the first trigger frame includes identification information of at least one second AP and resource allocation information indicating a first communication resource of the at least one second AP, the first communication resource is used for data transmission between the at least one second AP and an associated station, and the first trigger frame is used to trigger the at least one second AP to perform data transmission with the associated station by using the first communication resource; and
sending the first trigger frame to the at least one second AP through the communications interface.

In a possible implementation, the first trigger frame includes at least one user information field, and one user information field in the at least one user information field corresponds to one second AP in the at least one second AP. The user information field includes an AID subfield and a resource allocation subfield, the AID subfield includes identification information of a second AP corresponding to the user information field, and the resource allocation subfield includes resource allocation information of the second AP corresponding to the user information field. Alternatively, the user information field includes an AID subfield, a first subfield, and a resource allocation subfield, the AID subfield is a preset AID value, the first subfield includes identification information of a second AP corresponding to the user information field, and the resource allocation subfield includes resource allocation information of the second AP corresponding to the user information field.

In a possible implementation, the identification information of the second AP is generated by using a media access control MAC address of the second AP, or the identification information of the second AP is an association identifier of a backhaul station included in a device to which the second AP belongs.

In a possible implementation, the user information field of the first trigger frame includes a temporary primary channel identifier, and the temporary primary channel identifier is used to indicate a primary channel used by the second AP corresponding to the user information field to perform data transmission with an associated station.

In a possible implementation, the first trigger frame further includes a common information field, the data transmission includes downlink data transmission, and the common information field includes a transmission parameter of a downlink data frame sent by the at least one second AP in the downlink data transmission. The transmission parameter of the downlink data frame includes one or more of a length of the downlink data frame, a guard interval GI and a type of a long training field LTF used in the downlink data frame, a quantity of high efficiency long training field HE-LTF symbols included in the downlink data frame, whether a space-time block code STBC is used in the downlink data frame, information about whether the downlink data frame has an extra symbol segment encoded by a low density parity check LDPC code, a length of a packet extension PE used in the downlink data frame, and information about whether the downlink data frame has a mid-amble (mid-amble).

In a possible implementation, the first trigger frame further includes a common information field, the data transmission includes uplink data transmission, and the common information field includes a transmission parameter of an uplink data frame sent by the associated station in the uplink data transmission. The transmission parameter of the uplink data frame includes one or more of a length of the uplink data frame, a GI and a type of an LTF used in the uplink data frame, a quantity of HE-LTF symbols included in the uplink data frame, whether a space-time block code STBC is used in the uplink data frame, information about whether the uplink data frame has an extra symbol segment encoded by an LDPC, a length of a PE used in the uplink data frame, and information about whether the uplink data frame has a mid-amble.

In addition, for implementation of each operation in FIG. 12, refer to a corresponding description of the method embodiment shown in FIG. 3.

In the first access point in this embodiment of this application, the first access point AP may send the first trigger frame to the at least one second AP. The first trigger frame includes the identification information of the at least one second AP and the resource allocation information indicating the first communication resource of the at least one second AP. In addition, the at least one second AP may be triggered to perform data transmission with the associated station by using the first communication resource. The first access point may coordinately allocate the communication resource of the at least one second AP, thereby improving data transmission efficiency of a user while reducing interference in a wireless network.

FIG. 13 is a schematic diagram of a second access point according to an embodiment of this application. The second access point includes a processor 1301, a memory 1302, and a communications interface 1303. The processor 1301, the memory 1302, and the communications interface 1303 are connected to each other by using a bus 1304.

The memory 1302 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1302 is configured to store related instructions and data.

The processor 1301 may be one or more central processing units (central processing unit, CPU). When the processor 1301 is one CPU, the CPU may be a single-core CPU, or may be a multi-core CPU.

The processor 1301 in the second access point is configured to read program code stored in the memory 1302, to perform the following operations:
receiving a first trigger frame from a first AP through the communications interface, where the first trigger frame includes identification information of the second AP and resource allocation information indicating a first communication resource of the second AP, the first communication resource is used for data transmission between the second AP and an associated station, and the first trigger frame is used to trigger the second AP to perform data transmission with the associated station by using the first communication resource; and
performing data transmission with the associated station by using the first communication resource.

In a possible implementation, the first trigger frame includes at least one user information field, and one user information field in the at least one user information field corresponds to one second AP in the at least one second AP. The user information field includes an AID subfield and a resource allocation subfield, the AID subfield includes identification information of a second AP corresponding to the user information field, and the resource allocation subfield includes resource allocation information of the second AP corresponding to the user information field. Alternatively, the user information field includes an AID subfield, a first subfield, and a resource allocation subfield, the AID subfield is a preset AID value, the first subfield includes identification information of a second AP corresponding to the user information field, and the resource allocation subfield includes resource allocation information of the second AP corresponding to the user information field.

In a possible implementation, the identification information of the second AP is generated by using a media access control MAC address of the second AP, or the identification information of the second AP is an association identifier of a backhaul station included in a device to which the second AP belongs.

In a possible implementation, the user information field of the first trigger frame includes a temporary primary channel identifier, and the temporary primary channel identifier is used to indicate a primary channel used by the second AP corresponding to the user information field to perform data transmission with the associated station.

In a possible implementation, the processor is further configured to send temporary primary channel announcement information to the associated station through the communications interface, where the temporary primary channel announcement information includes an identifier of the second AP and the temporary primary channel identifier.

In a possible implementation, the data transmission includes downlink data transmission, and the first trigger frame is used to trigger the second AP to perform downlink data transmission with the associated station by using the first communication resource; and the processor is specifically configured to send a downlink data frame to the associated station by using the first communication resource.

In a possible implementation, the data transmission includes uplink data transmission, and the first trigger frame is used to trigger the second AP to perform uplink data transmission with the associated station by using the first communication resource; and the processor is specifically configured to send a second trigger frame to the associated station through the communications interface, where the second trigger frame includes identification information of the associated station and resource allocation information indicating a second communication resource of the associated station, the second communication resource is a communication resource that is in the first communication resource and that is used by the associated station to send a data frame to the second AP, and the second trigger frame is used to trigger the associated station to send an uplink data frame to the second AP; and receive the uplink data frame from the associated station through the communications interface.

In a possible implementation, the first trigger frame further includes a common information field, the data transmission includes downlink data transmission, and the common information field includes a transmission parameter of a downlink data frame sent by the second AP in the downlink data transmission. The transmission parameter of the downlink data frame includes one or more of a length of the downlink data frame, a GI and a type of an LTF used in the downlink data frame, a quantity of HE-LTF symbols included in the downlink data frame, whether an STBC is used in the downlink data frame, information about whether the downlink data frame has an extra symbol segment encoded by an LDPC, a length of a PE used in the downlink data frame, and information about whether the downlink data frame has a mid-amble.

In a possible implementation, the first trigger frame further includes a common information field, the data transmission includes uplink data transmission, and the common information field includes a transmission parameter of an uplink data frame sent by the associated station in the uplink data transmission. The transmission parameter of the uplink data frame includes one or more of a length of the uplink data frame, a GI and a type of an LTF used in the uplink data frame, a quantity of HE-LTF symbols included in the uplink data frame, whether an STBC is used in the uplink data frame, information about whether the uplink data frame has an extra symbol segment encoded by an LDPC, a length of a PE used in the uplink data frame, and information about whether the uplink data frame has a mid-amble.

In a possible implementation, the second trigger frame includes at least one user information field, and one user information field in the at least one user information field corresponds to one associated station in the associated stations. The user information field corresponding to the one associated station includes an AID subfield and a resource allocation subfield, the AID subfield includes identification information of the one associated station, and the resource allocation subfield includes resource allocation information of the one associated station.

In a possible implementation, the second trigger frame further includes a common information field, and the common information field includes a transmission parameter of the uplink data frame. The transmission parameter of the uplink data frame includes one or more of a length of the uplink data frame, a GI and a type of an LTF used in the uplink data frame, a quantity of HE-LTF symbols included in the uplink data frame, whether a space-time block code STBC is used in the uplink data frame, information about whether the uplink data frame has an extra symbol segment encoded by an LDPC, a length of a PE used in the uplink data frame, and information about whether the uplink data frame has a mid-amble.

In a possible implementation, the common information field further includes one or more of information indicating whether the first access point continues to send a next first trigger frame, information indicating whether a channel is idle needs to be detected before the data transmission is performed, and information indicating whether the second access point performs uplink data transmission or downlink data transmission with the associated station.

In a possible implementation, the common information field further includes information indicating whether the second access point continues to send a next second trigger frame, and information indicating whether a channel is idle needs to be detected before the data transmission is performed.

In addition, for implementation of each operation in FIG. 13, refer to a corresponding description of the method embodiment shown in FIG. 3.

In the second access point in this embodiment of this application, the second access point AP may receive the first trigger frame sent by the first AP. The first trigger frame includes the identification information of the second AP and the resource allocation information indicating the first communication resource of the second AP. In addition, the second AP may be triggered to perform data transmission with the associated station by using the first communication resource. The second AP may perform data transmission by using the allocated communication resource coordinated by the first AP, thereby improving data transmission efficiency of a user while reducing interference in a wireless network.

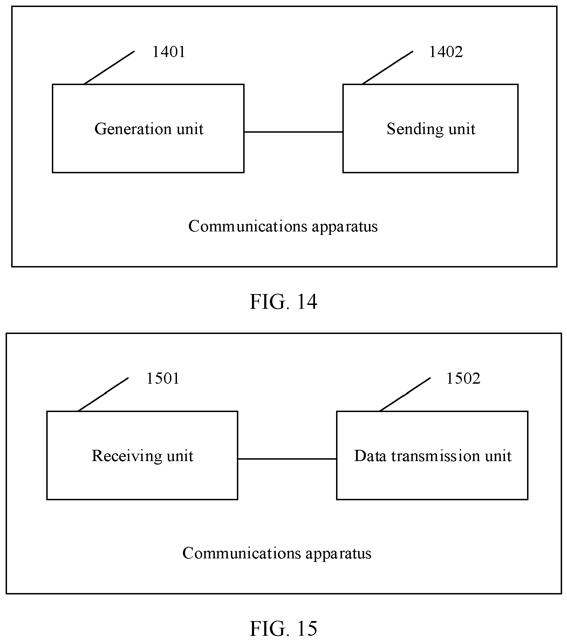

FIG. 14 is a schematic diagram of another communications apparatus according to an embodiment of this application. The communications apparatus is applied to a first access point, and may be configured to implement the method in the foregoing embodiment. The first access point includes a generation unit 1401 and a sending unit 1402. The generation unit 1401 and the sending unit 1402 are described below.

The generation unit 1401 is configured to generate a first trigger frame. The first trigger frame includes identification information of at least one second AP and resource allocation information indicating a first communication resource of the at least one second AP. The first communication resource is used for data transmission between the at least one second AP and an associated station, and the first trigger frame is used to trigger the at least one second AP to perform data transmission with the associated station by using the first communication resource.

The sending unit 1402 is configured to send the first trigger frame to the at least one second AP.

In addition, for implementation of each operation in FIG. 14, refer to a corresponding description of the method shown in the foregoing embodiment.

In the first access point in this embodiment of this application, the first access point AP may send the first trigger frame to the at least one second AP. The first trigger frame includes the identification information of the at least one second AP and the resource allocation information indicating the first communication resource of the at least one second AP. In addition, the at least one second AP may be triggered to perform data transmission with the associated station by using the first communication resource. The first access point may coordinately allocate the communication resource of the at least one second AP, thereby improving data transmission efficiency of a user while reducing interference in a wireless network.

FIG. 15 is a schematic diagram of another communications apparatus according to an embodiment of this application. The communications apparatus may be applied to a second access point, to implement the method in the foregoing embodiment. The second access point includes a receiving unit 1501 and a data transmission unit 1502. The receiving unit 1501 and the data transmission unit 1502 are described below.

The receiving unit 1501 is configured to receive a first trigger frame from a first AP. The first trigger frame includes identification information of the second AP and resource allocation information indicating a first communication resource of the second AP. The first communication resource is used for data transmission between the second AP and an associated station, and the first trigger frame is used to trigger the second AP to perform data transmission with the associated station by using the first communication resource.

The data transmission unit 1502 is configured to perform data transmission with the associated station by using the first communication resource.

In a possible implementation, the data transmission includes downlink data transmission, and the first trigger frame is used to trigger the second AP to perform downlink data transmission with the associated station by using the first communication resource; and the data transmission unit 1502 is specifically configured to send a downlink data frame to the associated station by using the first communication resource.

In a possible implementation, the data transmission includes uplink data transmission, and the first trigger frame is used to trigger the second AP to perform uplink data transmission with the associated station by using the first communication resource; and the data transmission unit 1502 is specifically configured to send a second trigger frame to the associated station through the communications interface, where the second trigger frame includes identification information of the associated station and resource allocation information indicating a second communication resource of the associated station, the second communication resource is a communication resource that is in the first communication resource and that is used by the associated station to send a data frame to the second AP, and the second trigger frame is used to trigger the associated station to send an uplink data frame to the second AP; and receive the uplink data frame from the associated station through the communications interface.

In addition, for implementation of each operation in FIG. 15, refer to a corresponding description of the method shown in the foregoing embodiment.

In the second access point in this embodiment of this application, the second access point AP may receive the first trigger frame sent by the first AP. The first trigger frame includes the identification information of the second AP and the resource allocation information indicating the first communication resource of the second AP. In addition, the second AP may be triggered to perform data transmission with the associated station by using the first communication resource. The second AP may perform data transmission by using the allocated communication resource coordinated by the first AP, thereby improving data transmission efficiency of a user while reducing interference in a wireless network.

An embodiment of this application further provides a chip, including a processor, configured to invoke, from a memory, instructions stored in the memory and run the instructions, to enable a communications device on which the chip is installed to perform the methods in the foregoing examples.

An embodiment of this application further provides another chip, including an input interface, an output interface, and a processor, and a memory. The input interface, the output interface, the processor, and the memory are connected by using an internal connection path. The processor is configured to execute code in the memory. When the code is executed, the processor is configured to perform the methods in the foregoing examples.

An embodiment of this application further provides a processor, configured to be coupled to a memory, and configured to perform a method and a function that are related to an AP in any one of the foregoing embodiments.

In another embodiment of this application, a computer program product is provided. When the computer program product runs on a computer, the method in the foregoing embodiment is implemented.

In another embodiment of this application, a computer-readable storage medium is provided. The computer-readable storage medium stores a computer program. When the computer program is executed by a computer, the method in the foregoing embodiment is implemented.

## Claims

1. A data transmission method, comprising:
generating (S301), by a first access point, AP, a first trigger frame, wherein the first trigger frame comprises identification information of at least one second AP and resource allocation information indicating a first communication resource of the at least one second AP, the first communication resource is used for data transmission between the at least one second AP and an associated station, and the first trigger frame is used to trigger the at least one second AP to perform data transmission with the associated station by using the first communication resource, wherein the first trigger frame comprises at least one user information field, and one user information field in the at least one user information field corresponds to one second AP in the at least one second AP;
the user information field comprises an AID subfield and a resource allocation subfield, the AID subfield comprises identification information of the second AP corresponding to the user information field, and the resource allocation subfield comprises resource allocation information of the second AP corresponding to the user information field; or
the user information field comprises an AID subfield, a first subfield, and a resource allocation subfield, the AID subfield is a preset AID value, the first subfield comprises identification information of the second AP corresponding to the user information field, and the resource allocation subfield comprises resource allocation information of the second AP corresponding to the user information field,
wherein the user information field further comprises a temporary primary channel identifier, and the temporary primary channel identifier is used to indicate a primary channel used by the second AP corresponding to the user information field to perform data transmission with the associated station; and
sending (S302), by the first AP, the first trigger frame to the at least one second AP.

2. A data transmission method, comprising:
receiving (S302), by a second access point, AP, a first trigger frame from a first AP, wherein the first trigger frame comprises identification information of the second AP and resource allocation information indicating a first communication resource of the second AP, the first communication resource is used for data transmission between the second AP and an associated station, and the first trigger frame is used to trigger the second AP to perform data transmission with the associated station by using the first communication resource, wherein the first trigger frame comprises at least one user information field, and one user information field in the at least one user information field corresponds to one second AP in the at least one second AP;
the user information field comprises an AID subfield and a resource allocation subfield, the AID subfield comprises identification information of the second AP corresponding to the user information field, and the resource allocation subfield comprises resource allocation information of the second AP corresponding to the user information field; or
the user information field comprises an AID subfield, a first subfield, and a resource allocation subfield, the AID subfield is a preset AID value, the first subfield comprises identification information of the second AP corresponding to the user information field, and the resource allocation subfield comprises resource allocation information of the second AP corresponding to the user information field,
wherein the user information field further comprises a temporary primary channel identifier, and the temporary primary channel identifier is used to indicate a primary channel used by the second AP corresponding to the user information field to perform data transmission with the associated station; and
performing (S303), by the second AP, data transmission with the associated station by using the first communication resource.

3. The method according to claim 1 or 2, wherein the identification information of the second AP is generated by using a media access control MAC address of the second AP, or the identification information of the second AP is an association identifier of a backhaul station comprised in a device to which the second AP belongs.

4. The method according to any one of claims 1 to 3, wherein the first trigger frame further comprises a common information field, the data transmission comprises downlink data transmission, and the common information field comprises a transmission parameter of a downlink data frame sent by the at least one second AP in the downlink data transmission; and
the transmission parameter of the downlink data frame comprises one or more of a length of the downlink data frame, a guard interval GI and a type of a long training field LTF used in the downlink data frame, a quantity of high efficiency long training field HE-LTF symbols comprised in the downlink data frame, whether a space-time block code STBC is used in the downlink data frame, information about whether the downlink data frame has an extra symbol segment encoded by a low density parity check LDPC code, a length of a packet extension PE used in the downlink data frame, and information about whether the downlink data frame has a mid-amble.

5. The method according to any one of claims 1 to 4, wherein the first trigger frame further comprises a common information field, the data transmission comprises uplink data transmission, and the common information field comprises a transmission parameter of an uplink data frame sent by the associated station in the uplink data transmission; and
the transmission parameter of the uplink data frame comprises one or more of a length of the uplink data frame, a GI and a type of an LTF used in the uplink data frame, a quantity of HE-LTF symbols comprised in the uplink data frame, whether a space-time block code STBC is used in the uplink data frame, information about whether the uplink data frame has an extra symbol segment encoded by an LDPC, a length of a PE used in the uplink data frame, and information about whether the uplink data frame has a mid-amble.

6. The method according to claim 1 or 2, further comprising:
sending, by the second AP, temporary primary channel announcement information to the associated station, wherein the temporary primary channel announcement information comprises an identifier of the second AP and the second temporary primary channel identifier.

7. The method according to claim 2, wherein the data transmission comprises downlink data transmission, and the first trigger frame is used to trigger the second AP to perform downlink data transmission with the associated station by using the first communication resource; and
the performing, by the second AP, data transmission with the associated station by using the first communication resource comprises:
sending, by the second AP, a downlink data frame to an associated station by using the first communication resource.

8. The method according to claim 2, wherein the data transmission comprises uplink data transmission, and the first trigger frame is used to trigger the second AP to perform uplink data transmission with the associated station by using the first communication resource; and
the performing, by the second AP, data transmission with the associated station by using the first communication resource comprises:
sending, by the second AP, a second trigger frame to the associated station, wherein the second trigger frame comprises identification information of the associated station and resource allocation information indicating a second communication resource of the associated station; and the second communication resource is a communication resource that is in the first communication resource and that is used by the associated station to send a data frame to the second AP, and the second trigger frame is used to trigger the associated station to send an uplink data frame to the second AP; and
receiving, by the second AP, the uplink data frame from the associated station.

9. An Access Point, comprising a processor, a memory, and a communications interface, wherein:
the memory is configured to store program instructions; and
the processor is configured to perform a method as claimed in any one of claims 1 or 3 to 5 when dependent on claim 1 according to the program instructions.

10. A chip for an Access Point comprising a processor, an input and an output interface, wherein:
the processor is configured to execute code in a memory, when the code is executed, the processor is configured to perform a method as claimed in any one of claims 1, 3 to 5 or perform a method as claimed in any one of claims 2 to 8.

11. An Access Point, configured to perform a method as claimed in any one of claims 2 or 3 to 8 when dependent on claim 2.

12. A computer-readable storage medium, wherein the computer storage medium stores program instructions, and when the program instructions are executed by an Access Point, the Access Point is enabled to perform the method according to any one of claims 1, 3 to 5 or perform a method according to any one of claims 2 to 8.

## Patentansprüche

1. Datenübertragungsverfahren, umfassend:
Erzeugen (S301), durch einen ersten Zugangspunkt, AP, eines ersten Auslöserahmens, wobei der erste Auslöserahmen Kennungsinformationen mindestens eines zweiten AP und Ressourcenzuweisungsinformationen, die eine erste Kommunikationsressource des mindestens einen zweiten AP angeben, umfasst, die erste Kommunikationsressource zur Datenübertragung zwischen dem mindestens einen zweiten AP und einer zugeordneten Station verwendet wird und der erste Auslöserahmen dazu verwendet wird, den mindestens einen zweiten AP auszulösen, um eine Datenübertragung mit der zugeordneten Station unter Verwendung der ersten Kommunikationsressource durchzuführen, wobei der erste Auslöserahmen mindestens ein Benutzerinformationsfeld umfasst und ein Benutzerinformationsfeld in dem mindestens einen Benutzerinformationsfeld einem zweiten AP in dem mindestens einen zweiten AP entspricht;
das Benutzerinformationsfeld ein AID-Teilfeld und ein Ressourcenzuweisungsteilfeld umfasst, das AID-Teilfeld Kennungsinformationen des zweiten AP, der dem Benutzerinformationsfeld entspricht, umfasst und das Ressourcenzuweisungsteilfeld Ressourcenzuweisungsinformationen des zweiten AP, der dem Benutzerinformationsfeld entspricht, umfasst; oder
das Benutzerinformationsfeld ein AID-Teilfeld, ein erstes Teilfeld und ein Ressourcenzuweisungsteilfeld umfasst, das AID-Teilfeld ein voreingestellter AID-Wert ist, das erste Teilfeld Kennungsinformationen des zweiten AP, der dem Benutzerinformationsfeld entspricht, umfasst und das Ressourcenzuweisungsteilfeld Ressourcenzuweisungsinformationen des zweiten AP, der dem Benutzerinformationsfeld entspricht, umfasst,
wobei das Benutzerinformationsfeld ferner eine temporäre primäre Kanalkennung umfasst und die temporäre primäre Kanalkennung dazu verwendet wird, einen primären Kanal anzugeben, der durch den zweiten AP, der dem Benutzerinformationsfeld entspricht, dazu verwendet wird, eine Datenübertragung mit der zugeordneten Station durchzuführen; und
Senden (S302), durch den ersten AP, des ersten Auslöserahmens an den mindestens einen zweiten AP.

2. Datenübertragungsverfahren, umfassend:
Empfangen (S302), durch einen zweiten Zugangspunkt, AP, eines ersten Auslöserahmens von einem ersten AP, wobei der erste Auslöserahmen Kennungsinformationen des zweiten AP und Ressourcenzuweisungsinformationen, die eine erste Kommunikationsressource des zweiten AP angeben, umfasst, die erste Kommunikationsressource zur Datenübertragung zwischen dem zweiten AP und einer zugeordneten Station verwendet wird und der erste Auslöserahmen dazu verwendet wird, den zweiten AP auszulösen, um eine Datenübertragung mit der zugeordneten Station unter Verwendung der ersten Kommunikationsressource durchzuführen, wobei der erste Auslöserahmen mindestens ein Benutzerinformationsfeld umfasst und ein Benutzerinformationsfeld in dem mindestens einen Benutzerinformationsfeld einem zweiten AP in dem mindestens einen zweiten AP entspricht;
das Benutzerinformationsfeld ein AID-Teilfeld und ein Ressourcenzuweisungsteilfeld umfasst, das AID-Teilfeld Kennungsinformationen des zweiten AP, der dem Benutzerinformationsfeld entspricht, umfasst und das Ressourcenzuweisungsteilfeld Ressourcenzuweisungsinformationen des zweiten AP, der dem Benutzerinformationsfeld entspricht, umfasst; oder
das Benutzerinformationsfeld ein AID-Teilfeld, ein erstes Teilfeld und ein Ressourcenzuweisungsteilfeld umfasst, das AID-Teilfeld ein voreingestellter AID-Wert ist, das erste Teilfeld Kennungsinformationen des zweiten AP, der dem Benutzerinformationsfeld entspricht, umfasst und das Ressourcenzuweisungsteilfeld Ressourcenzuweisungsinformationen des zweiten AP, der dem Benutzerinformationsfeld entspricht, umfasst,
wobei das Benutzerinformationsfeld ferner eine temporäre primäre Kanalkennung umfasst und die temporäre primäre Kanalkennung dazu verwendet wird, einen primären Kanal anzugeben, der durch den zweiten AP, der dem Benutzerinformationsfeld entspricht, dazu verwendet wird, eine Datenübertragung mit der zugeordneten Station durchzuführen; und
Durchführen (S303), durch den zweiten AP, einer Datenübertragung mit der zugeordneten Station unter Verwendung der ersten Kommunikationsressource.

3. Verfahren nach Anspruch 1 oder 2, wobei die Kennungsinformationen des zweiten AP unter Verwendung einer Medienzugriffssteuerungsadresse, MAC-Adresse, des zweiten AP erzeugt wird oder die Kennungsinformationen des zweiten AP eine zugeordnete Kennung einer Backhaul-Station sind, die in einer Vorrichtung, zu welcher der zweite AP gehört, umfasst ist.

4. Verfahren nach einem der Ansprüche 1 bis 3, wobei der erste Auslöserahmen ferner ein gemeinsames Informationsfeld umfasst, die Datenübertragung eine Downlink-Datenübertragung umfasst und das gemeinsame Informationsfeld einen Übertragungsparameter eines Downlink-Datenrahmens umfasst, der durch den mindestens einen zweiten AP in der Downlink-Datenübertragung gesendet wird; und
der Übertragungsparameter des Downlink-Datenrahmens eines oder mehrere von Folgendem umfasst: einer Länge des Downlink-Datenrahmens, einem Schutzintervall, GI, und einer Art eines Long Training Field, LTF, das in dem Downlink-Datenrahmen verwendet wird, einer Quantität hocheffizienter Long-Training-Field-Symbole, HE-LTF-Symbole, die in dem Downlink-Datenrahmen umfasst ist, ob ein Raum-Zeit-Blockcode, STBC, in dem Downlink-Datenrahmen verwendet wird, Informationen darüber, ob der Downlink-Datenrahmen ein zusätzliches Symbolsegment, das durch einen Code mit Prüfung geringer Dichteparität, LDPC-Code, codiert ist, aufweist, einer Länge einer Paketerweiterung, PE, die in dem Downlink-Datenrahmen verwendet wird, und Informationen darüber, ob der Downlink-Datenrahmen eine Midamble aufweist.

5. Verfahren nach einem der Ansprüche 1 bis 4, wobei der erste Auslöserahmen ferner ein gemeinsames Informationsfeld umfasst, die Datenübertragung eine Uplink-Datenübertragung umfasst und das gemeinsame Informationsfeld einen Übertragungsparameter eines Uplink-Datenrahmens umfasst, der durch die zugeordnete Station in der Uplink-Datenübertragung gesendet wird; und
der Übertragungsparameter des Uplink-Datenrahmens eines oder mehrere von Folgendem umfasst: einer Länge des Uplink-Datenrahmens, einem GI und einer Art eines LTF, das in dem Uplink-Datenrahmen verwendet wird, einer Quantität von HE-LTF-Symbolen, die in dem Uplink-Datenrahmen umfasst ist, ob ein Raum-Zeit-Blockcode, STBC, in dem Uplink-Datenrahmen verwendet wird, Informationen darüber, ob der Uplink-Datenrahmen ein zusätzliches Symbolsegment, das durch einen LDPC codiert ist, aufweist, einer Länge einer PE, die in dem Uplink-Datenrahmen verwendet wird, und Informationen darüber, ob der Uplink-Datenrahmen eine Midamble aufweist.

6. Verfahren nach Anspruch 1 oder 2, ferner umfassend:
Senden, durch den zweiten AP, temporärer primärer Kanalankündigungsinformationen an die zugeordnete Station, wobei die temporären primären Kanalankündigungsinformationen eine Kennung des zweiten AP und die zweite temporäre primäre Kanalkennung umfassen.

7. Verfahren nach Anspruch 2, wobei die Datenübertragung eine Downlink-Datenübertragung umfasst und der erste Auslöserahmen dazu verwendet wird, den zweiten AP auszulösen, um eine Downlink-Datenübertragung mit der zugeordneten Station unter Verwendung der ersten Kommunikationsressource durchzuführen; und
das Durchführen, durch den zweiten AP, der Datenübertragung mit der zugeordneten Station unter Verwendung der ersten Kommunikationsressource Folgendes umfasst:
Senden, durch den zweiten AP, eines Downlink-Datenrahmens an eine zugeordnete Station unter Verwendung der ersten Kommunikationsressource.

8. Verfahren nach Anspruch 2, wobei die Datenübertragung eine Uplink-Datenübertragung umfasst und der erste Auslöserahmen dazu verwendet wird, den zweiten AP auszulösen, um eine Uplink-Datenübertragung mit der zugeordneten Station unter Verwendung der ersten Kommunikationsressource durchzuführen; und
das Durchführen, durch den zweiten AP, der Datenübertragung mit der zugeordneten Station unter Verwendung der ersten Kommunikationsressource Folgendes umfasst:
Senden, durch den zweiten AP, eines zweiten Auslöserahmens an die zugeordnete Station, wobei der zweite Auslöserahmen Kennungsinformationen der zugeordneten Station und Ressourcenzuweisungsinformationen, die eine zweite Kommunikationsressource der zugeordneten Station angeben, umfasst; und die zweite Kommunikationsressource eine Kommunikationsressource ist, die sich in der ersten Kommunikationsressource befindet und die durch die zugeordnete Station dazu verwendet wird, einen Datenrahmen an den zweiten AP zu senden, und der zweite Auslöserahmen dazu verwendet wird, die zugeordnete Station auszulösen, um einen Uplink-Datenrahmen an den zweiten AP zu senden; und
Empfangen, durch den zweiten AP, des Uplink-Datenrahmens von der zugeordneten Station.

9. Zugangspunkt, umfassend einen Prozessor, einen Speicher und eine Kommunikationsschnittstelle, wobei:
der Speicher dazu konfiguriert ist, Programmanweisungen zu speichern; und
der Prozessor dazu konfiguriert ist, ein Verfahren nach einem der Ansprüche 1 oder 3 bis 5, wenn abhängig von Anspruch 1, gemäß den Programmanweisungen durchzuführen.

10. Chip für einen Zugangspunkt, umfassend einen Prozessor, eine Eingabe und eine Ausgabeschnittstelle, wobei:
der Prozessor dazu konfiguriert ist, einen Code in einem Speicher auszuführen, und, wenn der Code ausgeführt wird, der Prozessor dazu konfiguriert ist, ein Verfahren nach einem der Ansprüche 1, 3 bis 5 durchzuführen oder ein Verfahren nach einem der Ansprüche 2 bis 8 durchzuführen.

11. Zugangspunkt, der dazu konfiguriert ist, ein Verfahren nach einem der Ansprüche 2 oder 3 bis 8, wenn abhängig von Anspruch 2, durchzuführen.

12. Computerlesbares Speichermedium, wobei das computerlesbare Speichermedium Programmanweisungen speichert und, wenn die Programmanweisungen durch einen Zugangspunkt ausgeführt werden, es dem Zugangspunkt ermöglicht wird, das Verfahren nach einem der Ansprüche 1, 3 oder 5 durchzuführen oder ein Verfahren nach einem der Ansprüche 2 bis 8 durchzuführen.

## Revendications

1. Procédé de transmission de données, comprenant :
la génération (S301), par un premier point d'accès, AP, d'une première trame de déclenchement, dans lequel la première trame de déclenchement comprend des informations d'identification d'au moins un second AP et des informations d'allocation de ressources indiquant une première ressource de communication de l'au moins un second AP, la première ressource de communication étant utilisée pour une transmission de données entre l'au moins un second AP et une station associée, et la première trame de déclenchement est utilisée pour déclencher l'au moins un second AP pour réaliser une transmission de données avec la station associée en utilisant la première ressource de communication, dans lequel la première trame de déclenchement comprend au moins un champ d'informations utilisateur, et un champ d'informations utilisateur dans l'au moins un champ d'informations utilisateur correspondant à un second AP dans l'au moins un second AP ;
le champ d'informations utilisateur comprend un sous-champ AID et un sous-champ d'allocation de ressources, le sous-champ AID comprend des informations d'identification du second AP correspondant au champ d'informations utilisateur, et le sous-champ d'allocation de ressources comprend des informations d'allocation de ressources du second AP correspondant au champ d'informations utilisateur ; ou
le champ d'informations utilisateur comprend un sous-champ AID, un premier sous-champ, et un sous-champ d'allocation de ressources, le sous-champ AID est une valeur AID prédéfinie, le premier sous-champ comprend des informations d'identification du second AP correspondant au champ d'informations utilisateur, et le sous-champ d'allocation de ressources comprend des informations d'allocation de ressources du second AP correspondant au champ d'informations utilisateur,
dans lequel le champ d'informations utilisateur comprend également un identifiant de canal primaire temporaire, et l'identifiant de canal primaire temporaire est utilisé pour indiquer un canal primaire utilisé par le second AP correspondant au champ d'informations utilisateur pour réaliser une transmission de données avec la station associée ; et
l'envoi (S302), par le premier AP, de la première trame de déclenchement à l'au moins un second AP.

2. Procédé de transmission de données, comprenant :
la réception (S302), par un second point d'accès, AP, d'une première trame de déclenchement d'un premier AP, dans lequel la première trame de déclenchement comprend des informations d'identification du second AP et des informations d'allocation de ressources indiquant une première ressource de communication du second AP, la première ressource de communication est utilisée pour une transmission de données entre le second AP et une station associée, et la première trame de déclenchement est utilisée pour déclencher le second AP pour réaliser une transmission de données avec la station associée en utilisant la première ressource de communication, dans lequel la première trame de déclenchement comprend au moins un champ d'informations utilisateur, et un champ d'informations utilisateur dans l'au moins un champ d'informations utilisateur correspondant à un second AP dans l'au moins un second AP ;
le champ d'informations utilisateur comprend un sous-champ AID et un sous-champ d'allocation de ressources, le sous-champ AID comprend des informations d'identification du second AP correspondant au champ d'informations utilisateur, et le sous-champ d'allocation de ressources comprend des informations d'allocation de ressources du second AP correspondant au champ d'informations utilisateur ; ou
le champ d'informations utilisateur comprend un sous-champ AID, un premier sous-champ, et un sous-champ d'allocation de ressources, le sous-champ AID est une valeur AID prédéfinie, le premier sous-champ comprend des informations d'identification du second AP correspondant au champ d'informations utilisateur,
et le sous-champ d'allocation de ressources comprend des informations d'allocation de ressources du second AP correspondant au champ d'informations utilisateur,
dans lequel le champ d'informations utilisateur comprend également un identifiant de canal primaire temporaire, et l'identifiant de canal primaire temporaire est utilisé pour indiquer un canal primaire utilisé par le second AP correspondant au champ d'informations utilisateur pour réaliser une transmission de données avec la station associée ; et
la réalisation (S303), par le second AP, d'une transmission de données avec la station associée en utilisant la première ressource de communication.

3. Procédé selon la revendication 1 ou 2, dans lequel l'information d'identification du second AP est générée en utilisant une adresse MAC de contrôle d'accès média du second AP, ou l'information d'identification du second AP est un identifiant d'association d'une station de liaison terrestre comprise dans un dispositif auquel le second AP appartient.

4. Procédé selon l'une quelconque des revendications 1 à 3, dans lequel la première trame de déclenchement comprend également un champ d'informations commun, la transmission de données comprend une transmission de données de liaison descendante, et le champ d'informations commun comprend un paramètre de transmission d'une trame de données de liaison descendante envoyée par l'au moins un second AP dans la transmission de données de liaison descendante ; et
le paramètre de transmission de la trame de données de liaison descendante comprend un ou plusieurs d'une longueur de la trame de données de liaison descendante, d'un intervalle de garde GI et d'un type d'un champ d'entraînement long LTF utilisé dans la trame de données de liaison descendante, d'un nombre de symboles HE-LTF de champ d'entraînement long à haute efficacité compris dans la trame de données de liaison descendante, si un code de bloc spatio-temporel STBC est utilisé dans la trame de données de liaison descendante, des informations indiquant si la trame de données de liaison descendante a un segment de symbole supplémentaire codé par un code LDPC de contrôle de parité à faible densité, d'une longueur d'une extension de paquet PE utilisée dans la trame de données de liaison descendante, et des informations indiquant si la trame de données de liaison descendante a un mi-ambule.

5. Procédé selon l'une quelconque des revendications 1 à 4, dans lequel la première trame de déclenchement comprend également un champ d'informations commun, la transmission de données comprend une transmission de données de liaison montante, et le champ d'informations commun comprend un paramètre de transmission d'une trame de données de liaison montante envoyée par la station associée dans la transmission de données de liaison descendante ; et
le paramètre de transmission de la trame de données de liaison montante comprend un ou plusieurs d'une longueur de la trame de données de liaison montante, d'un GI et d'un type d'un LTF utilisé dans la trame de données de liaison montante, d'une quantité de symboles HE-LTF compris dans la trame de données de liaison montante, si un code de bloc spatio-temporel STBC est utilisé dans la trame de données de liaison montante, des informations indiquant si la trame de données de liaison montante a un segment de symbole supplémentaire codé par un LDPC, d'une longueur d'un PE utilisé dans la trame de données de liaison montante, et des informations indiquant si la trame de données de liaison montante a un mi-ambule.

6. Procédé selon la revendication 1 ou 2, comprenant également :
l'envoi, par le second AP, d'informations d'annonce de canal primaire temporaire à la station associée, dans lequel les informations d'annonce de canal primaire temporaire comprennent un identifiant du second AP et le second identifiant de canal primaire temporaire.

7. Procédé selon la revendication 2, dans lequel la transmission de données comprend une transmission de données de liaison descendante, et la première trame de déclenchement est utilisée pour indiquer au second AP de réaliser la transmission de données de liaison descendante avec la station associée en utilisant la première ressource de communication ; et
la réalisation, par le second AP, d'une transmission de données avec la station associée en utilisant la première ressource de communication comprend :
l'envoi, par le second AP, d'une trame de données de liaison descendante à une station associée en utilisant la première ressource de communication.

8. Procédé selon la revendication **2,** dans lequel la transmission de données comprend une transmission de données de liaison montante, et la première trame de déclenchement est utilisée pour indiquer au second AP de réaliser la transmission de données de liaison montante avec la station associée en utilisant la première ressource de communication ; et
la réalisation, par le second AP, d'une transmission de données avec la station associée en utilisant la première ressource de communication comprend :
l'envoi, par le second AP, d'une seconde trame de déclenchement à la station associée, dans lequel la seconde trame de déclenchement comprend des informations d'identification de la station associée et des informations d'allocation de ressources indiquant une seconde ressource de communication de la station associée ; et la seconde ressource de communication est une ressource de communication qui est dans la première ressource de communication et qui est utilisée par la station associée pour envoyer une trame de données au second AP, et la seconde trame de déclenchement est utilisée pour indiquer à la station associée d'envoyer une trame de données de liaison montante au second AP ; et
la réception, par le second AP, de la trame de données de liaison montante de la station associée.

9. Point d'accès, comprenant un processeur, une mémoire et une interface de communication, dans lequel :
la mémoire est configurée pour stocker des instructions de programme ; et
le processeur est configuré pour réaliser le procédé selon l'une quelconque des revendications 1 ou 3 à 5 lorsqu'elles dépendent de la revendication 1 selon les instructions de programme.

10. Puce pour point d'accès comprenant un processeur, une interface d'entrée et une interface de sortie, dans laquelle : le processeur est configuré pour exécuter un code dans une mémoire, lorsque le code est exécuté, le processeur est configuré pour réaliser un procédé selon l'une quelconque des revendications 1, 3 à 5 ou réaliser un procédé selon l'une quelconque des revendications 2 à 8.

11. Point d'accès, configuré pour réaliser un procédé selon l'une quelconque des revendications 2 ou 3 à 8 lorsqu'elles dépendent de la revendication 2.

12. Support de stockage lisible par ordinateur, dans lequel le support de stockage lisible par ordinateur stocke des instructions de programme et lorsque les instructions de programme sont exécutées par un point d'accès, le point d'accès est activé pour réaliser le procédé selon l'une quelconque des revendications 1, 3 à 5 ou réaliser un procédé selon l'une quelconque des revendications 2 à 8.
